# EUROPEAN PATENT SPECIFICATION

(11) **EP 0 995 153 B1**
(45) Date of publication and mention of the grant of the patent: **14.11.2001**
(21) Application number: 98933771.2
(22) Date of filing: 10.07.1998
(51) Int. Cl.: G06F 3/033

(54) **FORMAT FOR PASSING INFORMATION BETWEEN DEVICES**
FORMAT ZUM INFORMATIONSTRANSFER ZWISCHEN GERÄTEN
FORMAT DE TRANSFERT D'INFORMATIONS ENTRE DISPOSITIFS

(30) Priority: 18.07.1997 US 54047 P
(43) Date of publication of application: 26.04.2000
(73) Proprietor: Hewlett-Packard Company, A Delaware Corporation, Palo Alto, CA 94304 (US)
(72) Inventor: ARNOLD, Patrick, Simon, Boise, ID 83706 (US); WILLIAMS, Peter, Michael, Portishead, North Somerset BS20 8BU (GB); WILLERUP, Frederik, Boise, ID 83703 (US); SOWDEN, Anthony, Clifton, Bristol BS8 4PG (GB); WILLIAMS, Richard, David, Bradley Stoke, Bristol BS32 0DE (GB)
(74) Representative: Lawrence, Richard Anthony
(86) International application number: GB9802024
(87) International publication number: WO9904330

(56) References cited:
- US-A- 5 351 995
- US-A- 5 463 725
- "PAGE FLIPPING FOR USER INTERFACES" IBM TECHNICAL DISCLOSURE BULLETIN, vol. 36, no. 8, 1 August 1993, pages 237-239, XP000390208

## Description

The present invention relates to a method for passing information between devices. In particular, the present invention is particularly applicable to the passage of documents between information handling appliances by electronic means.

There is a pervasive requirement for efficient and successful passage of information between devices. This is particularly true for information handling devices which generate, receive or process documents in an electronic form. Such documents can be the product of a wordprocessing program, paper documents converted to an electronic form (for example, by scanning) or documents prepared for rendering in a tangible form (images or printer language files for printing).

For most examples of communication between electronic appliances, an application specific protocol is required - generally, communication will also be mediated by a computing device such as a personal computer. A result is that treatment and behaviour of an electronic document is considerably different from treatment and behaviour appropriate to a conventional paper document.

The present invention seeks to harmonise the treatment of electronic and physical documents by a user. Such harmonisation makes it easier for a user to handle an electronic document in an intuitive way.

Accordingly, the invention provides a method for electronic representation of documents to allow communication of documents between information handling appliances, wherein a document is provided in the form of a container containing a plurality of document parts organised as nodes in a tree structure such that each branch of the tree structure defines a containment relationship between document parts, and wherein one or more of the document parts is a representation of a two-sided sheet with information contained in such a document part being defined by its relationship to one or both sides of the respective two-sided sheet.

This enables the representation of documents in electronic form as containers, wherein a container contains one or more document parts in the form of two-sided sheets.

Two sided "electronic paper" is known in the context of applications running on a single computer system - US 5,351,995 provides an example. It is also known to mimic the turning of pages in "electronic book" applications to give the appearance of a physical book - an example is shown in US 5,463,725.

An electronic document produced in accordance with the invention therefore has a key basic characteristic of a physical document: it is a three dimensional (or at any rate, more than a two dimensional) object consisting of two-sided sheets. Electronic documents are generally represented in the form of pages, and when provided to printers will contain information that determines how the document provided is to be rendered on paper - including the rendering of the document on both sides of a sheet of paper. However, such conventional arrangements do not make the double-sided page a basic unit of the document - the separation of documents into pages is not fundamental to the document but a secondary feature handled by appropriate control codes, and the printing of a document in a double-sided rather than a single-sided manner is even less fundamental to the document, but is handled by an appropriate control instruction to the printer.

Such a three dimensional electronic document can also include information indicating how the two-sided sheets of the document can be manipulated in three dimensions - for example, by defining an axis around which the pages may "rotate". This axis can be a vertical axis, such as the spine of a book, or a horizontal axis, such as found in a reporter's notepad. Advantageously, this three-dimensional information could be passed to a printer so the document can be reproduced in a form which contains this three-dimensional information - such as by attaching the pages along a left hand edge where the document is designated to have book-like properties.

It can also be advantageous for a surface of such a double-sided page to have a "surface property" indicating how it can interact with other such pages. A particularly useful property is that of removeable adherence. This enables a document to have the behaviour of a repositionable self-adhesive note - now a key feature of a typical user's physical desk.

It is useful, and further directly analogous to the physical case, for certain properties of the double-sided page to be defined. Appropriate properties to define in this way are the opacity of the double-sided sheet to information on the reverse side (or behind the sheet) - a sheet with low opacity is analogous to electronic tracing paper - and the colour of the sheet. Other properties are valuable which have less clear antecedents in physical objects, but are of practical importance: for example, it is desirable for it to be possible not only for the position of information for attachment to a double-sided sheet to be fixed for every device receiving and attempting to render the document, but also for the position of such information to be varied according to the capabilities of the device receiving the document. Each of these possibilities provides a limitation which may be very useful in some cases but unwanted in others, so establishing the possibility of choosing either in a given case is useful.

In a second aspect, the invention provides information handling appliances adapted to support communication with a format as indicated above. Such information handling appliances can be document creators, such as cameras, scanners, or personal computers, or document consumers, such as printers, facsimile machines, and again personal computers.

The invention will be described in detail in the context of its use in the JetSend protocol of Hewlett-Packard. However, as will be described below, the invention is applicable not only to this protocol, but to any arrangement in which an electronic representation of a document is conveyable between two information handling devices.

Specific embodiments of the invention will be described below, by way of example, with reference to the accompanying drawings, of which:
Figure 1 shows the creation of a surface impression on one device from the surface expression of another;
Figure 2 shows a depiction of a two-page document in a visual and a surface representation;
Figure 3 shows the components of the JetSend architecture and their logical relationship to each other;
Figures 4a to 4f show the use of messages of the JetSend Interaction Protocol in exchange of information between appliances;
Figure 5 shows a hierarchy of attributes for the vPlane encoding;
Figure 6 illustrates schematically the assembly of elements for a vPlane encoding;
Figures 7a to 7d illustrate derivation of values for vBackCoord in the vPlane encoding;
Figure 8 illustrates an example of a document for encoding with vPlane incorporating four child elements;
Figure 9a shows a hierarchy of attributes for the vAssociation encoding, and Figure 9b shows a revised hierarchy for a modified form of the vAssociation encoding;
Figure 10 illustrates communication between devices to which the present invention is applicable; and
Figures 11a and 11b illustrate the use of repositionably adherent elements in the context of JetSend.

The present invention is described in detail with respect to the way that it is embodied in the JetSend architecture of Hewlett-Packard Company. An introduction to this architecture is provided on the World Wide Web at http://www.jetsend.hp.com/, and a full description is provided in the HP JetSend Communications Technology Protocol Specification, available from Hewlett-Packard Company and incorporated herein by reference. A detailed discussion of all key elements of the architecture are described in US Patent Application No. 09/059,867 entitled "Method and Apparatus for Device Interaction by Protocol" filed on 14 April 1998, and US Patent Application No. 09/059,909 entitled "Method and Apparatus for Device Interaction by Format" filed on 14 April 1998, both of which applications are incorporated by reference herein. The present application will discuss the basic elements of the architecture in general terms, and will describe in greater detail the formats in which information can be conveyed, and in particular the formats for conveying documents as associations of double-sided pages.

The basic elements of the JetSend architecture will be discussed below. Reference to preferred and required features below relates to preferred and required features of the JetSend architecture, rather than to preferred and required features of the invention itself.

Fundamental to the JetSend architecture are four principles which define how the system operates. These are as follows:

Peer to peer interaction - When network transport allows it, devices must be able to address other devices directly. Devices should not require the presence of a PC or any other intermediary device to enable an information exchange between two non-PC devices. Users can thus connect with a minimum configuration and can perform *ad hoc* information transfers.

Device and Device Type Independence - No device specific information about other devices should be preprogrammed into any device. A device should not be required to behave differently for a specific device or set of devices it may encounter. In the JetSend architecture, a device can perform generic operations, such as sending information or observing status, which do not in themselves have any device specific aspect. This allows any two JetSend enabled devices to interact without using drivers that are specific to a device or device type.

Negotiation - Devices are to negotiate data encodings to the highest common denominator that the sender and receiver support. There must be a default encoding for each data type that all senders and receivers using that data type must support. The ability to negotiate ensures that devices can implement high end and even proprietary data types, while the default encoding ensures that meaningful data exchange will always take place. Negotiation should be flexible and open ended.

Consistency - The same protocol is used regardless of whether the devices are exchanging control, transferring data, exchanging status information or passing any other form of information.

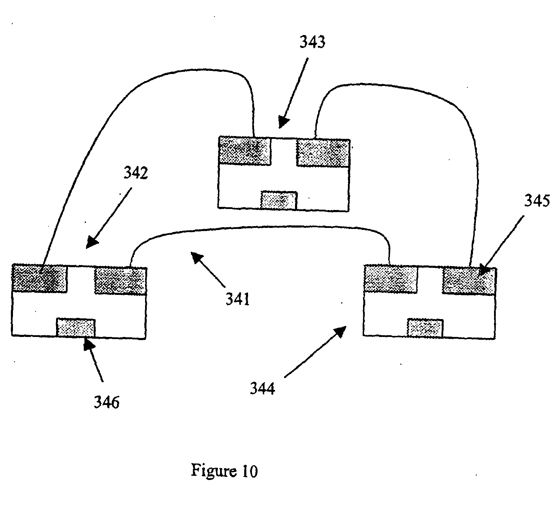

Figure 10 illustrates the environment in which JetSend devices operate. A network 341 of some kind exists between devices such as a printer 342, a personal computer 343, and a scanner 344. Each of these devices must possess a processor 346 of some kind, together of course with a connection means 345 to allow interface with the network 341. It is necessary in this implementation for each of the devices to have some measure of processing capacity, as such capacity is necessary for processes integral to JetSend.

The basis for communication between devices in JetSend is the surface interaction model. A surface is a representation of some aspect of internal state possessed by a device. The representation is universal, and is not determined by the functions performed by the device. A surface in this context is analogous to the surface provided by a physical object (such as a telephone, or a brick). The way in which the object operates is determined by how the "functional" parts of the object connect to the surface, but the surface itself can be described in a simple universal way, irrespective of function, and provides the medium through which the object is connectable to other physical objects in the world - the nature of the connection between physical objects being independent of any device function. In JetSend, the surface is the fundamental unit of information exchange, and images, documents, status messages, device labels and the like are all transferred through use of one or more surfaces. A surface consists of a number of elements: description, content, properties and class - these will be discussed further below.

The surface interaction model defines mechanisms for creating, sharing, modifying and deleting surfaces. Only a fixed number of generic operations can be performed on a surface, using the messages defined by the JetSend Interaction Protocol (JIP), which will be discussed further below.

The original copy of a surface is here termed an expression. There is one expression involved in any surface interaction. Devices that have information to share with other devices create one or more expressions to represent that information.

Surface expressions can be impressed on other devices. This creates an impression of that surface - also known as sharing the surface. Impressions are copies of other device's expressions, and connections are maintained between the devices to ensure that impressions are up-to-date with their corresponding expression. Typically, two devices will share several surfaces at a given time; surfaces that represent the elements of a job, status information from each device, security information, and so forth.

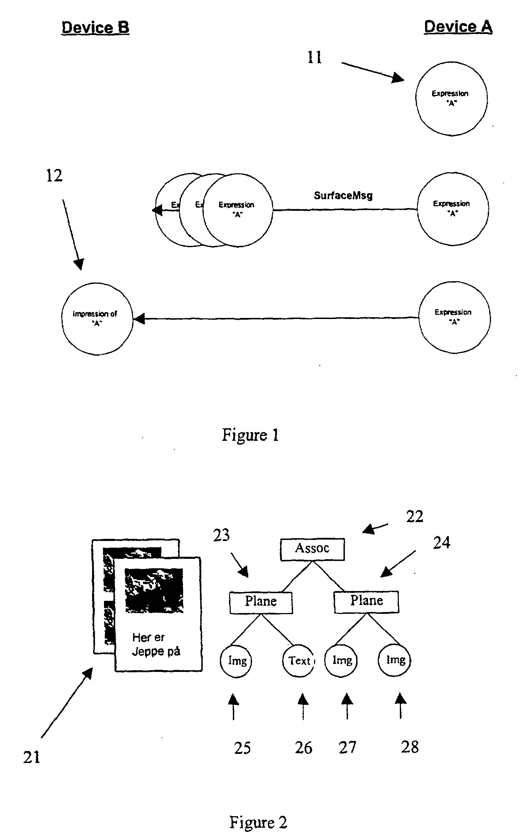

Figure 1 shows how an expression 11 on one device (Device A) is shared with another device (Device B), thereby creating a new impression 12. The same expression can be impressed multiple times on multiple devices. This creates multiple impressions of the same surface expression. When the expression changes, or is deleted, all impressions will be notified. This is here termed change propagation.

Change propagation enables interesting dynamic features, such as status information, to be implemented for devices in the architecture. For example, a device with status information creates a surface expression containing a status string which is impressed on a number of connected devices. The device with the status changes the surface depending on its state. All the JetSend devices that have an impression of the status surface will receive update messages with the current status. This functionality is built into the architecture and its use by device designers is optional.

From an implementation standpoint, an expression is defined by the state that is kept about a given surface (its name, its description, its content and the set of impressions that have been made on remote devices). It will be shown later that from a protocol standpoint, an expression is defined by the surface handle used to exchange JIP messages about it.

A surface comprises a description of the surface, and the content contained within the surface. The distinction is fundamental to JetSend and of significance in aspects of the present invention, because it provides a mechanism for content negotiation.

The surface description establishes the full range of possible forms in which information associated with a surface (this information being provided as surface content data) can be shared with another device. The description consists of a data format hierarchy, and can be represented as a tree structure with a number of nodes each representing a definable aspect of the data format (referred to as an attribute, and discussed in greater detail elsewhere). A specific data format for the information associated with the surface is a path through this tree structure from a root node down to a terminal node (a leaf node of the tree). Such specific paths are reached through a process of negotiation. The process of negotiation, in this context, comprises the surface owner sharing the surface description, or a part of the surface description, with another device. The other device then chooses the options it prefers (generally such options will be selected so that the receiving device can use its own functionality in the richest manner available given the choices offered, but this is essentially a matter for the designer of any given device) and this process continues until a specific path, and thus a specific data format, is chosen.

The surface content is the information associated with the surface, and is provided in a format determined by negotiation as indicated above. The content data can be provided in all the formats indicated by the data format hierarchy embodied in the surface description, but for a given surface interaction will generally only be provided in one of the formats available. There does exist the possibility of providing information in more than one format for a single impression: a case where this may prove useful is in retrieval of information from a storage device, where initially, for example, an image may be provided initially as a thumbnail at low resolution, and later, after confirmation that the image is desired, provided at full size and high resolution without change of impression. Request for further content would be normal in such a situtation, however. Content data need not exist prior to completion of the negotiation: for some or all of the choices in the data format hierarchy the data may only be generated after the format choice is known. Alternatively, for some choices the content data may be provided directly together with the description identifying a particular point in the data format hierarchy as a part of the negotiation process (so no separate step of provision of content is required for that format choice). This is termed providing content data in-line.

As indicated above, descriptions are sent along with the original surface impression, but in the general case content is requested separately. For example, a surface representing a raster image might define a surface description with choices about color spaces, resolutions, and compressions for the image. The receiver of the impression will request the actual pixel data (the content), specifying a preferred encoding for the receiver from the choices available.

A surface description can also contain references to other surfaces. These surfaces are known as sub-surfaces (or child surfaces) and they must be requested separately from the owner of the parent surface. Each sub-surface contain its own description and content, independent of its parent. A document, for example, can be encoded as multiple surfaces each representing a separate page. The document itself is represented as a surface containing references to these page surfaces.

A document, in this context, has a broader meaning than a collection of pages bound or otherwise held in a single unit. Here, a document is any collection of information held in such a form that it can be provided by one device for processing by another device. In the specific context of JetSend, a document comprises one or more surfaces where each surface is connected to all the other surfaces either directly by a single parent-child relationship or indirectly through a chain of parent-child or child-parent relationships.

A surface reference, or a surface name, is simply an ASCII string - like a URL. All surfaces are identified by their name, and may belong to a particular class. All surfaces possess a class. Class is a property indicating the purpose for which the surface is used: in the present implementation, each surface must have one, and only one, class. Classes of surfaces include the self-surface, in-surface, status-surface and address-surface. Specific rules exist, or may be devised, for use of surfaces of a particular class. Classes are used particularly in the context of specific policies. For example, the job policy employs one particular class of surface, the in-surface, as a means to provide jobs to a job processing device. A printer has an in-surface, and surfaces that are impressed onto the in-surface will be treated as new jobs and printed. A PC, a camera, or some other sending device may be impressing surfaces on to this in-surface. Where a particular class of surface plays a fundamental role in execution of a given policy, surfaces of that class are termed "well-known surfaces" for that policy.

A policy, or interaction policy, is a set of conventions for use of generic surface interactions to achieve a particular task. The advantage of using a policy for a particular task is that it enables all JetSend devices adapted to perform, or require another device to perform, the particular task to interact successfully and in a predictable way with other devices in order to achieve that particular task. This does not exclude the possibility of, for example, a pair of devices adapted to perform such a task in a different way not open to other JetSend devices using a different class of surface to do so. However, it is desirable that such devices still support the relevant JetSend policy so that they can achieve this task with other JetSend devices too.

All surface interaction between two devices are done with the following messages:
- SurfaceRequestMsg - request a surface of a particular name (and class)
- SurfaceMsg - impress a surface (send its description)
- ContentRequestMsg and ContentReplyMsg - transfer surface content
- DescriptionRequestMsg and DescriptionReplyMsg - transfer additional description
- SurfaceChangeMsg - notify and request changes to a surface
- SurfaceReleaseMsg - remove the connection between an impression and its expression

The use of these messages is described at a later point.

E-material, a term coined as a shortened version of "electronic material", is the form taken by information through which surfaces are expressed and shared. It comprises description and content. The description indicates a hierarchy of choices of format in which the associated content data can be provided. The content is the data associated with the surface itself. The description indicates the ways in which the data can be presented, whereas the content is the information itself, presented in a form chosen to be suitable for the device sending it and the device receiving it. The existence of this choice is key to the concept of e-material, and the mechanism by which this choice is made is discussed further below.

Surface interaction and e-material are at the heart of the JetSend. The two concepts are separate, but closely related. Surface interaction is the protocol for exchanging information encoded as e-material. It is the combination of surfaces and e-material that allow JetSend devices to negotiate data types, and exchange information in a device independent fashion.

E-material is not a file format. E-material defines the format of the data that devices exchange, but it does not define how devices process or store that data. Devices that consume e-material do so on a manner that is specific to that device. For example, a receiving device such as a printer will process e-material differently than a receiving device such as a PC. The PC may put the e-material into some kind of a file format, while the printer may convert it to PCL or PostScript™, and eventually to dots on a page.
Likewise, devices that produce e-material will do so in a manner that is specific to that device.
The most fundamental division of e-material types is into encodings. An encoding is an e-material representation of a fundamental form in which information can be presented in the world. The idea of a "fundamental form" can be illustrated by the different encodings so far defined.
vText relates to presentation of information in the form of written text. A string of ASCII or Unicode text that fills a rectangular plane (no font or spacing information). The simple text encoding is used mainly for status information, but can be used to mark pages as well. The symbol set is negotiable.
vImage relates to presentation of information in the form of graphical images. The encoding relates to a raster image, for which there is the possibility of negotiating qualities such as color space, pixel depth, resolution, pixel encoding, and compression.
vPlane represents to presentation of information on a planar object, of which the commonest form in life is a sheet of paper - as in real life, vPlane relates to planar objects with two sides. More specifically, this encoding provides a two-dimensional rectangular plane with a background colour, and an ordered "layer" of child elements on its front and back. A page is a plane containing other encodings such as images or text. The vPlane encoding of JetSend shows the implementation of the present invention in JetSend.
vFile relates to presentation of information in the form of a binary file. Binary files include such things as documents in application specific formats, executables, etc. A file name, mime-type and an icon can be associated with the data. The mime-type can be negotiated.
vAssociation relates to presentation of information in the form of an assembly of information presented in one or more formats (which will each be represented by their own encoding). Essentially, an association is an ordered sequence of child elements. A conventional document might be represented as an association of pages. The vAssociation encoding, in combination with the vPlane encoding, shows the treatment of documents containing a series of double-sided pages within the JetSend architecture, and thus illustrates particular aspects of the present invention.

Further encodings can readily be devised, and will be appropriate for device types and functions not addressed in the existing JetSend specification: for example, voice or sound encodings may be devised to represent information in the form of human voice or sound more generally. It should also be noted that the term "encoding" is used here not only to signify fundamental format types, but also to any specific data format hierarchy (for example, one reached at the end of a particular negotiation process). Such uses of the term "encoding" are however readily distinguishable by context.

For each encoding (vImage, vText etc.) there is defined a single default encoding. This ensures that all devices which are able to exchange data of a particular type (for example, all devices which can represent images in some form - personal computers, printers, scanners, but not a microphone) are able to exchange data in some form. In the case of an image, the base encoding in the present implementation is vImage.vGray.1.(300,300).vRLE: all devices which are capable of using image information can exchange information in this format.

There will generally be a better format available for the exchange of data than the default encoding - which must, of course, be available for use by the devices with the least rich function set. It is nonetheless desirable to have standard formats which will generally be available for exchange by devices of higher functionality. Such encodings are termed base encodings: base encodings will not be supported by all devices, but it would be expected that all devices with sufficiently rich functionality to do so would support exchange of data according to a base encoding.

An attribute is a feature of a piece of e-material that is defined in the e-material description (or defined for the piece of e-material after the completion of the negotiation process). Essentially, each node in the data format hierarchy provided in the e-material description represents an attribute. From this equivalence between nodes and attributes there is derived the concept of an "attribute level": essentially, an attribute level is shared by all nodes equally distant from the root node of the data format hierarchy. Attributes comprise a quality that can be provided for the e-material content, and a choice or value for that quality: this can range from the size in which an image is provided, or the language in which text is provided, to somewhat less tangible qualities (such as the order in which elements are rendered on a plane), and the choice or value may itself represent a further attribute (a quality requiring a choice or value). The quality itself is represented by an attribute name (sometimes shortened to "attribute" in this description), whereas the choice or value is represented by an "attribute value" (sometimes shortened to value in this description): consequently the nodes of the data format hierarchy can be considered as providing a specific quality and either a specific choice or a range of choices for that quality. Attribute names are keywords, for which the available values or choices are predefined, so the options offered in a given surface description for a given keyword must be some selection from these predefined choices. For different encodings, certain attributes will be required, others will be optional, and others not used at all.

E-material thus expresses the encoding choices of a surface with a number of attribute-value pairs arranged in a hierarchy. All surface descriptions contain the attribute vEncoding (all attribute and value names are prefixed with a lower case v). As indicated above, this determines the overall encoding of the surface - for example, if it is raster image, vEncoding will be vImage. It can also be a list of choices, where the owner of this surface can provide its contents in more than one encoding.

Each encoding has a number of standard attribute-value pairs associated with it. For example, vImage defines attributes such as resolution, pixel size, colour space, and compression. Some of these attributes can also contain choices. In fact, the owner of the surface can express quite complex choices by adding options to many of the attributes in the surface description.

The attributes are arranged in a hierarchy, which allows different choices for a certain attribute depending on previous choices. For example, if an image encoding is offered for a surface, it might contain a choice of JPEG or JPEG-LS compression if SRGB is chosen as the colour space, but RLE or Group3 fax compression if monochrome is the colour space.

Surface descriptions that list encoding choices are written in a tabular form, termed a description table. Examples of description tables will be shown later in this specification. Once a device receives a surface description, it is faced with the decision as to which encoding it prefers for that surface. Once made, the choice is sent to the owner of the surface, with a request for the actual content data.

The description table lists the attributes in three columns: the level, the attribute and its value. The level specifies the values of other attributes that a given attribute applies to. For example, the attribute "vResolution" with the value "(150,150)" may only apply if the selections "vImage.vSRGB.24" have been made for previous attributes listed in the same description.

All encodings can be negotiated with respect to the vLanguage attribute. Any surface can be offered in multiple languages for localization purposes. For each language, different choices about the encoding can be given. It is even possible to offer, say, text for one language and image for another.

The JetSend specification here described is focused on modeling static two-dimensional visual information. It therefore specifies encodings that are useful for representing information that can be contained on physical paper. E-material is not limited to this type of information, and new encodings can readily be devised within the context of the present invention applicable to, in principle, any form of information that can be exchanged between devices. It is also possible to invent proprietary encodings as long as certain rules are followed. This allows effective communication between pairs or groups of devices.

Figure 2 depicts a two-page document. A visual representation 21 is shown on the left, and its surface representation on the right. In this case, it is represented using seven surfaces, each with its own encoding. The rectangles are surfaces that contain references to other surfaces. The top-level surface 22 is an association with a reference to each of the two pages of the document. Each page is represented as a plane encoding 23, 24. Each plane contains two references to surfaces that represent the information on the pages. The first plane 23 points to an image surface 25 and a text surface 26. The second plane 24 points to two image surfaces 27, 28. Each image surface is negotiated separately, and might contain different encoding offerings.

This is just one way that this document can be represented using surfaces and e-material. In this case it is broken down into the elements that are visible on the page - i.e., the three images and the text segment. Another possibility is to encode the information as two planes, each with one large image region covering the entire page. It is a design choice of the owner of a document how to encode its information.

As indicated above, incorporated into this architecture is the principle of provision of a default encoding. For each encoding there is a default set of attributes that all JetSend devices are required to support. The default encoding ensures that any combination of devices that exchange the same class of information will be able to communicate. It also ensures forwards compatibility: new devices can implement smarter encodings as long as they support the default one.

All devices are required to support the association encoding, which is simply a container for surfaces with other encodings. Also, all devices that deal with static two-dimensional information are required to support the plane encoding.

The default encoding for imaging devices is 300x300 dpi, monochrome, RLE compressed raster. That means that all JetSend image devices (printers, scanners, copiers, cameras, whiteboards, etc.) must be able to send and/or receive this encoding. Text and File encodings are optional for such devices. As devices supporting other classes of data are implemented, default encodings for those data types will also be introduced. This would include such data types as audio and video. The default is intended as the lowest common denominator for a given encoding.

As further indicated above, in addition to default encodings, an optional but advantageous feature is the provision of base encodings. These are recommended, higher-level encodings that ensure better results for devices with higher capabilities. For instance, for colour imaging devices there is a base encoding for colour images that these devices should support, in addition to the default encodings. A device is free to offer additional encodings as long as the default encodings are offered as well. The device may provide better level of performance or quality by also implementing the base encodings best suited to that particular device type.

The JetSend protocols are designed to be independent of device type, platform and transport. A brief overview of each of the functional components of JetSend appliances. Appliance is a term widely used throughout this specification, and is given a more specific meaning than device. An appliance is a device with a dedicated function, which is capable of substantially independent handling of the data provided to it to achieve that dedicated function. It thus has a broader utility than a pure peripheral to a personal computer, for example. An appliance is generally not reprogrammable, and will generally require only a minimum quantity of configuration to operate. Devices such as scanners and printers will desirably function as appliances when adapted to support the present implementation of the present invention.

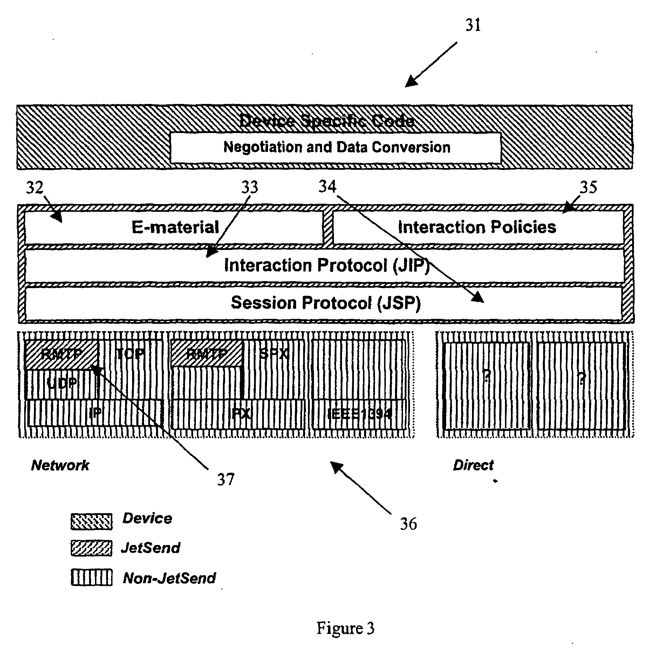

There are three primary areas of functionality that make up a JetSend appliance; the transports in the device, the JetSend protocols themselves, and device specific code. Figure 3 identifies the components of the JetSend architecture and their logical relationships to each other. This is followed by an overview of each of the components. Details for each component are provided at a later point. It should be noted that Figure 3 is not an implementation diagram. It shows the relationship between the protocol, not between software components. Actual implementations can have similar components, or combine the implementation of multiple protocols into a single module.

The JetSend architecture is applicable independent of transport . JetSend devices can address each other directly over any bi-directional transport 36 using unique addressing. It is necessary for the transport to be reliable: therefore for an unreliable transport such as UDP, a further protocol layer must be added to make transmissions over the transport reliable (a further protocol here termed Reliable Message Transport Protocol (RMTP) 37 is used for this purpose). Possible transports include TCP/IP, SPX/IPX, IrDA, IEEE1284, IEEE1394, and others. A device can implement one or more transports, allowing it to communicate with other devices using those same transports.

Communication between JetSend appliances occurs using a number of layered protocols, as can be seen from Figure 3. These layers are similar to most networking systems, where each protocol layer communicates with the equivalent layer in the other device. The layers that comprise the JetSend protocol are the Interaction Policies 35, the Interaction Protocol 33, the Session Protocol 34 and the RMTP Protocol 37.

The Interaction Policies define various typical sequences of interactions that devices will follow. The interaction policies are used in as generic building blocks to accomplish more specific information exchanges between devices. The following interaction policies have been defined and are discussed further below:
- Job Policy - How to send documents between senders and receivers.
- Self Policy - How to exchange global information about a device such as label, icon and passwords.
- Status Policy - How to give status about a device and about jobs.
- Address Policy - How to program devices with new destination addresses.

Devices are not required to implement any of the policies, but most devices will implement the job policy. Further policies can be developed within the JetSend architecture to address different areas where it is desirable to establish a generic behaviour in communication.

The interaction protocol uses the session protocol to exchange information about surfaces. The JetSend Interaction Protocol contains messages for requesting and transferring surface descriptions, transferring content data for a surface, and updating surfaces. In conjunction with E-material, this provides the mechanism for negotiating data types between devices.

The session protocol defines messages for setting up sessions and channels between two devices. A session manages the establishment and termination of data transport between the two JetSend entities. It can create logical channels within that context for communications. All these interactions take place over whatever transport is provided by the transport layer below. JSP is also used in gateways between JetSend and non-JetSend devices.

When a channel uses an unreliable transport such as UDP, RMTP provides the reliability service for that channel. RMTP is a reliable, sequenced delivery protocol. RMTP is not transport specific, and a single instance of it can maintain connections through all of the transport stacks simultaneously.

The Device Code is the term used for the logic needed to tie the JetSend protocols into an actual device.
The Device Code 31 in Figure 3 can exist in any device that is capable of either producing or consuming information. Typical producing devices are scanners and PC applications. Typical consumers are printers and PC viewers. A device must be able to convert between the device specific information/data formats and the e-material used by the JetSend protocols.

The negotiating done by JIP is specific to a particular class of data. Each device will have its own preferences for data encodings, and thus will negotiate for different attributes and make different choices. All devices use the JetSend protocols for negotiation, a process in which the sender makes an offer, the receiver chooses its preferred encoding and makes a request, and the sender fulfils the request. The device code is the very device-specific implementation of the component that interacts between the JetSend protocols and the actions of the devices. Functionality that is left up to the device to implement includes:
User-interface implementation and control
E-material negotiation and consumption (in the sense of providing e-material encodings in order of preference and in handling incoming e-material)
E-material production
Error notification and recovery

The JetSend Session Protocol can support multiple transport layers such as TCP/IP, IPX/SPX, IrDA, loop-back, etc. It is up to the developer of any given device to determine which transports are made available. The transport implementation must be compatible with the transport code in a JetSend device.
There are two specific areas of code that must implemented be for compatability with JetSend transport code. These are the session layer of the protocol, and the provision of some reliable messaging system.

The transport architecture comprises the JetSend Session Protocol in conjunction with the transports that the device decides to support. Devices implementing JetSend using TCP/IP must implement the JetSend Session Protocol and RMTP for unreliable datagram services.

The transport protocols used in JetSend will not be described in greater detail here, but is provided in, for example, http://www.jetsend.hp.com/, and in US Patent Application No. 09/059,867 and US Patent Application No. 09/059,909 referenced above and incorporated by reference herein. However, the JetSend Interaction Protocol (JIP) will be discussed in order to indicate the mechanism for interaction between devices to determine the information that is then exchanged between them. The protocols underlying JIP and not discussed in detail herein are necessary essentially only to allow appropriate exchange of JIP messages between devices.

Fundamental to the JIP is the concept of surface exchange. One way of picturing the concept is to think of "a surface" as being the surface of a block of modeling clay. This block of clay may be moulded into any shape by its owner. An observer sees the surface of this object as represented by its surface: in other words, the owner of the clay moulds the block into a shape whose *surface* describes what the object is.

Assume the observer has another, unmoulded, block of clay. The owner of the original moulded block of clay can impress his shaped block onto the surface of the observer's unmoulded block. The observer now has an exact replica of the original moulded shape impressed upon its own clay block (strictly, the metaphor breaks down at this point: in surface exchange the observer has an exact copy of the original, not an inverse or mirror image). So, the owner of the original block of clay (the *expressive* device) has impressed upon the observer's block of clay (the *impressive* device) a copy of the original surface.

The JIP is made up of a small number of messages that allow any number of devices to share pieces of information termed surfaces and exchanged according to the surface exchange model. In any interaction one device owns the surface. The owner's copy is referred to as the expression of the surface, and the owner itself is known as the expressive device. All other copies of the surface are referred to as impressions, and the devices holding them are called impressive devices. The messages provided by the JIP allow the expressive device to create and destroy expressions, the impressive devices to destroy impressions they hold, and any device to modify the original surface expression.

In order to implement the concept of surfaces, expressions, impressions and so forth, a list of messages has been created. It is through the use of these messages that all "surface-interaction" takes place. The following messages make up the Interaction Protocol:
- SurfaceMsg (Impress) - creates new impressions of surfaces on target device, also used to reject requests for impressions.
- SurfaceDeleteMsg (Delete) - notifies impressive devices that the expressive device has deleted the original expression
- SurfaceReleaseMsg (Unimpress) - notifies the expressive device that an impressive device has deleted an impression
- SurfaceRequestMsg (Surface Request) - allows a device to request an impression of a named surface
- DescriptionRequestMsg (Description Request) - allows a device to request the description for a surface it has an impression of
- DescriptionReplyMsg (Description Reply) - transmits the description for an impression in response to a description request
- ContentRequestMsg (Content Request) - allows an impressive device to request some content data from the expressive device
- ContentReplyMsg (Content Data) - transmits some content data from the expressive device to an impressive device in response to a content request: there may be a sequence of these messages in response to a content request, and this message is also used to reject a content request
- SurfaceChangeMsg (Change) - notifies a device that the information has changed (ie by expressive devices to notify impressive devices of a change, and by impressive devices to request a change an expression - also rejections of these requests)

A surface has a number of attributes. They are a name, an identifier, a class, a set of properties, a description, some content data and a version. The name is a NULL terminated ASCII string. The identifier is allocated to each surface and uniquely identifies it in the JIP. The class is used to determine the purpose of the surface. The set of properties controls what JIP messages an expressive device will respond to. The description contains a description of the formats the data is available in, or which the expressive device is willing to provide. The content data contains the actual bytes of the information itself. The version is used by the change mechanism so expressive and impressive devices know which version of a surface a change relates to.

A typical interaction proceeds as follows. First, the device with information to transfer, which will be the expressive device, creates an expression. To do this it needs to create a name, allocate a unique identifier, create a set of properties, and create a description. At this point it does not need to create any content data, although it must be able to produce the content described in the surface description.
Next, the expressive device uses these attributes and attempts to create impressions of this surface by sending a SurfaceMsg to the target device or devices. Note that such SurfaceMsgs may be sent out unsolicited or they may be sent in response to an earlier SurfaceRequestMsg received from another device. Also note that in order to create an impression using the SurfaceMsg, the expressive device must have a "target surface" on which to "impress" the expression. When the SurfaceMsg is in response to an earlier SurfaceRequestMsg, this target-surface identifier can be found in the SurfaceRequestMsg. If, however, the expressive device is creating an unsolicited impression, the target-surface identifier can be that of an existing impression, in which case the expression must already exist, or it may be set to the "default target" identifier.

The default target identifier is sometimes referred too as the "work surface". The existence of such a default is important for proper implementation of JIP. Otherwise, there is a bootstrap problem when an expressive device is first sending a message to an impressive device: the expressive device does not know where to create an impression on the impressive device (of which it has no knowledge at this point), and the impressive device cannot conveniently tell the expressive device (without sending some kind of global message) as it is not aware that the expressive device wishes to create an impression. The solution is the existence for all devices accepting impressions of a default or work surface with a default target identifier (in this implementation the default target identifier has been set at 1). This enables any expressive device to create an impression on an impressive device by setting the target identifier field to 1. The impressive device can then enter into communication with the expressive device (for example, with a SurfaceRequestMsg message requesting impressions to a new target surface).

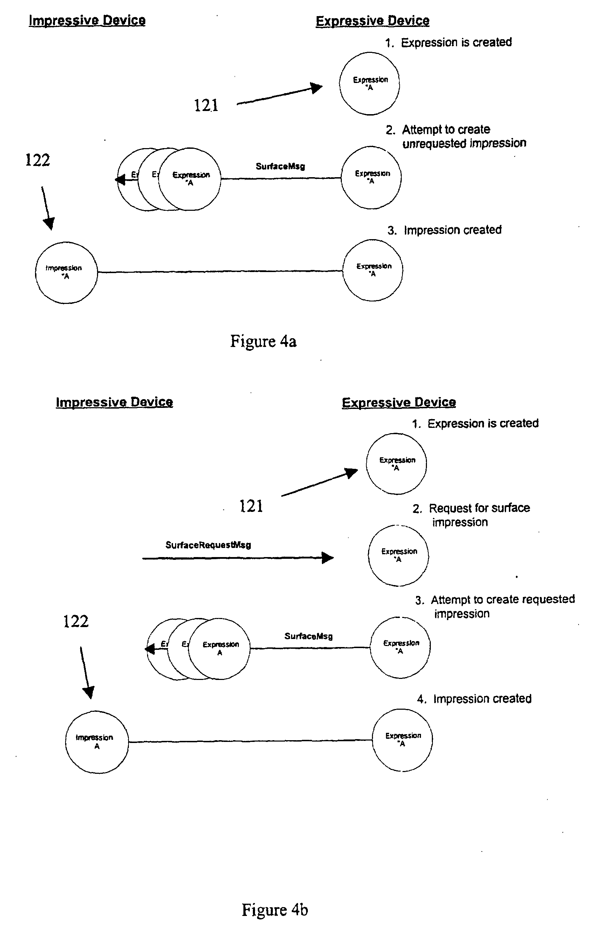

A series of examples illustrating use of the messages of the JIP is provided below, with reference to Figures 4a to 4f. Figure 4a is essentially similar to Figure 1, but is provided as Figure 4a for convenience.

### Example 1: Figure 4a

An expressive device wishes to create an unrequested impression. First, a surface expression 121 is created. This is then impressed on the impressive device with SurfaceMsg and an impression 122 of the surface exists at the impressive device.

### Example 2: Figure 4b

An expressive device creates a surface expression for information that it wishes to exchange with other appliances. In this example, the expression already exists before it is requested, but this is not necessarily the case (for example, child surfaces may not in some cases be created until they are actually requested). The expressive device then receives a request for a surface impression in a SurfaceRequestMsg from the impressive device, and in response attempts to create the impression with a SurfaceMsg. The end result is as in Example 1, with an impression 122 created at the impressive device.

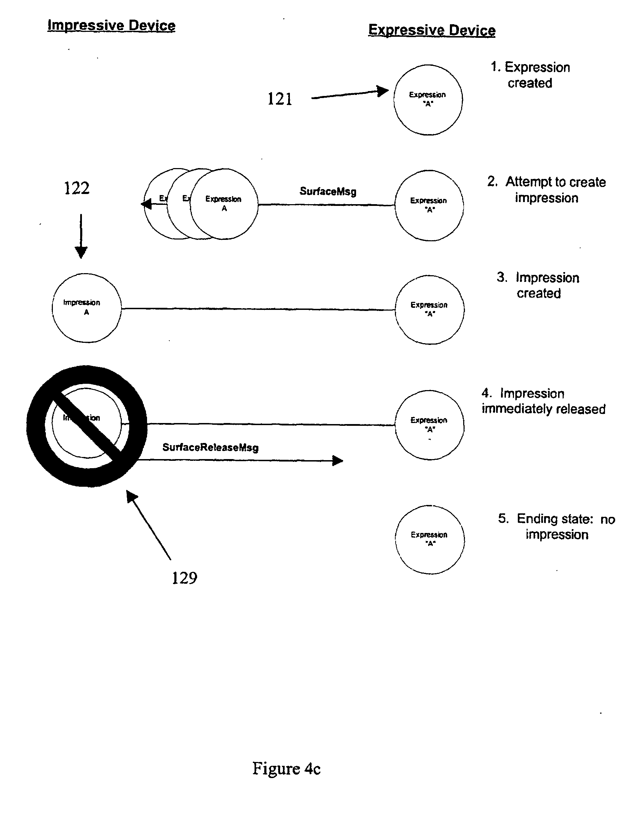

### Example 3: Figure 4c

An expressive device creates a surface expression and attempts to create an unrequested impression on an impressive device, as in Example 1. The impression 122 is created, but is then immediately released 129 with a SurfaceReleaseMsg from the impressive device to the expressive device. The end state is with an expression 121 of the surface at the expressive device, but with no impression of the surface at the impressive device.

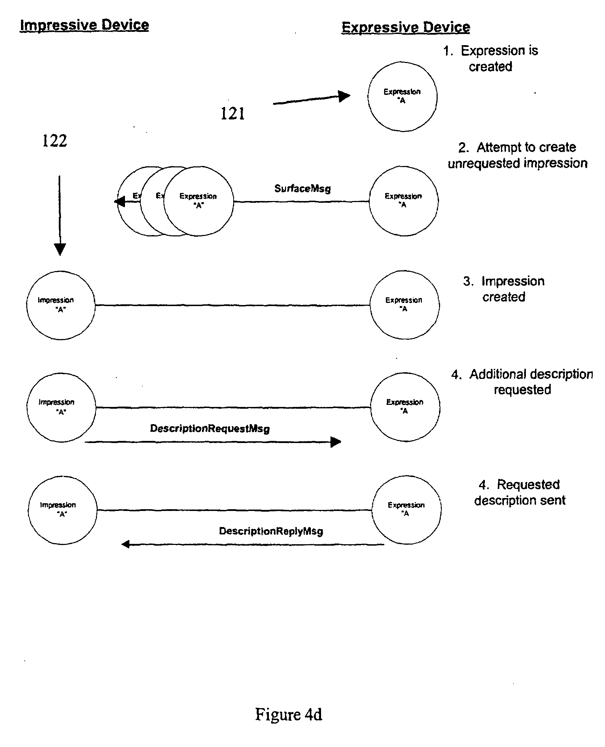

### Example 4: Figure 4d

As in Example 1, an unrequested impression 122 is successfully impressed on the impressive device. The impressive device then can use the description in the impression 122 to determine what action to take next. In some cases, such as that in this example, the surface description contained in the original SurfaceMsg is not complete. The impressive device can then request more information from the expressive device with a DescriptionRequestMsg message. The expressive device replies to the DescriptionRequestMsg with a DescriptionReplyMsg, which contains the further surface description.

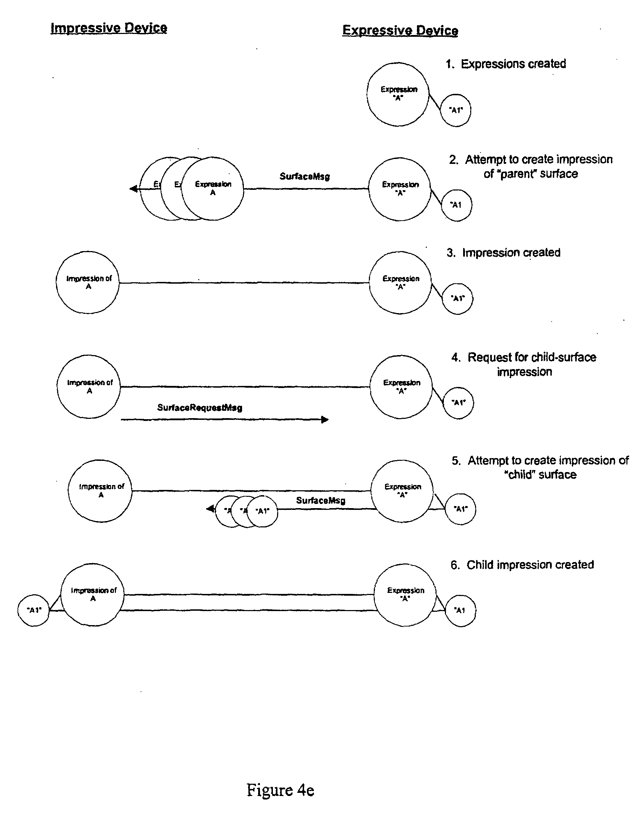

### Example 5: Figure 4e

A surface description may contain reference to sub-surfaces, or child-surfaces, of the top-level surface (for example e-material encoded as an association will in practice always contain child surfaces. Example 5 relates to a surface A which has a child surface A1. An expression 121, 123 of each surface is provided at the expressive device (alternatively, only an expression 121 of surface A may be provided at this point). Surface A is then impressed on the impressive device with a SurfaceMsg. The impressive device may then request an impression of the child surface Al from the expressive device with a SurfaceRequestMsg. This request can be rejected, or accepted, in which latter case the expressive device sends a further SurfaceMsg (after first creating an expression of child surface Al if such an expression does not already exist). The end state is with an expression 121 of surface A and an expression 123 of child surface Al at the expressive device, and corresponding impressions 122, 124 of surface A and child surface Al at the impressive device.

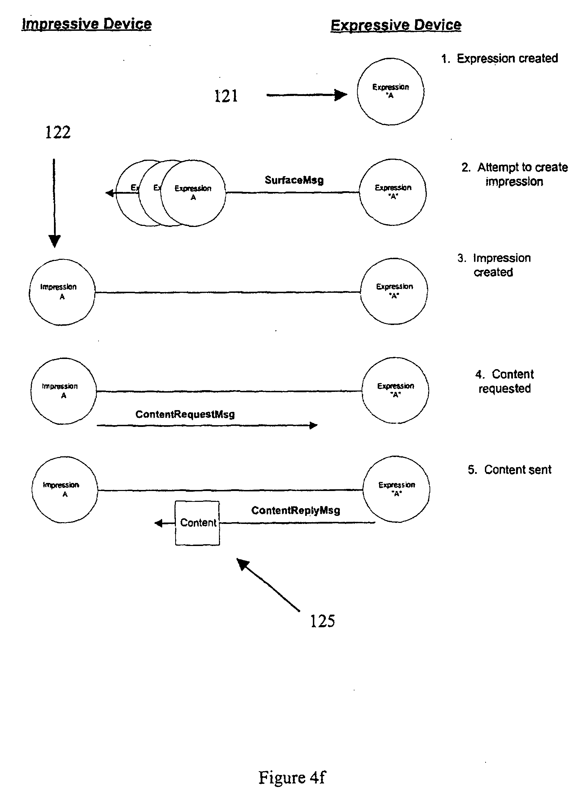

### Example 6: Figure 4f

Once an impression of a surface is provided at an impressive device, the impressive device may request content with a ContentRequestMsg. On receiving a ContentRequestMsg, the expressive device may reject the request or provide content 125 in the format requested. This content may be sent as a ContentReplyMsg message (as here), a series of ContentReplyMsg messages, or through another means such as a stream.

The JIP runs over the JetSend Session Protocol (JSP). The JSP manages all aspects of a session between two devices including creating and deleting sessions as well as deciding when a session has become unusable. The JSP also provides access to the basic addressing, reliable message transport protocols, and any other transport protocols used by the JIP.

An appliance can have a session started *passively* or it can *actively* start a session with another. In order for the JIP to have a session started passively, it must first instruct the JSP to listen for a session on a specific transport. Once the JSP is listening on that transport, another appliance can then actively start a session by instructing the JSP to call that device on the specific transport. If a connection is made, the remote and local JSPs will negotiate to a supported version of the JSP and at that point both JIPs should be notified that a session has been established. JSP will provide the JIP with session-handles that map to this session. These session-handles should be used whenever the JIP specifically needs to reference the session, such as when the JIP wishes to end the session.

An implementation of the JIP will potentially maintain quite a lot of state about surfaces related to a given session. Under some circumstances the JSP may terminate a session whilst devices still have outstanding impressions, requests and content data. This may occur, for example, when a device is powered down or when there is a network failure that causes the JSP to delete the session. When the JIP is unexpectedly notified of the end of a session it must then clean up its local state relating to that session so that no artefacts that have meaning only in the context of the session remain. For instance, the local JIP will not receive any SurfaceReleaseMsgs telling it that its outstanding impressions have been released and thus will have to clean up its internal state. The same is true of any outstanding ContentRequestMsgs, DescriptionRequestMsgs, etc.

The JIP exchanges its messages over channels provided and maintained by the JSP. These message channels must be reliable and ordered. An implementation of JSP may provide various other types of channels, such as a stream-channel.

The message channels can be created once a session has been established between two appliances. Once a session has been established, it is the responsibility of the active JIP to request that the first message channel be opened. Accordingly, it is the responsibility of the passive JIP to be listening for a channel. Thus, it is suggested that the passive JIP instruct the JSP to listen for a channel as soon as a connection is established. The functionality of calling, closing, and listening for channels is provided by the JSP. Note that an active call to open a channel should not be issued by the JIP until the JSP gives notification that the remote device is passively listening for a channel.

Once the JSP has negotiated for and opened a message channel, it will provide a handle to this channel to the JIP. The JIP can then use this channel to send and receive messages. This channel is valid until it has been closed, either by a network failure or by an explicit call to do so. Once a session has been established and a message channel has been opened, either side of the connection can request that additional channels be opened. These additional channels may be opened on any of the transports supported by the JSP.

In addition to sending content-data across the message channel, the JIP allows for content-data to be sent across any specific channel supported by the two appliances. Both the ContentRequestMsg and the ContentReplyMsg contain a field that relates to the choice of channel over which the content-data will flow.

Each message of the JetSend Interaction Protocol will now be specified in detail

### SurfaceMsg (Impress)

This message is used in three situations: first to initiate a transfer of a surface from the expressive device to another device. Secondly it is used as the response to a SurfaceRequestMsg from another device. Thirdly it is used to reject a SurfaceMsg from an expressive device. A status field is set to indicate which interpretation is to be used.

When this message is used either to initiate a surface transfer or as a response to a surface request, the sending device creates an entry in its surface table, so the impressive device can be notified of any changes.

On receipt of the message, if the destination chooses to accept the impression, it creates an entry in its surface table associating the impression with the expression. This allows it to notify the expressive device subsequently of when it wants to request changes to the surface or when it has finished with it. If the destination chooses not to accept the impression, then it should send back a release message to reject it and not create a table entry. Any subsequent messages relating to the "impression" should then be ignored.

When a sending device receives a release message for an impression it should delete the entry relating to the impression from its table. This ensures that the device which released the impression will not receive any messages related to the impression.

There is a short period between the sending of an impression and the receipt of a release message rejecting it. During this period the expressive device may consider the impression to exist. This will not cause any practical problem, as the issue will be resolved at the receiving end: the "impressing device" is required to ignore messages relating to impressions which it has not accepted, or which it no longer has.

### SurfaceDeleteMsg (Delete)

This message is used by an expressive device to notify impressive devices that the expression has been deleted. When an expressive device deletes an expression, it must notify all impressive devices which hold an impression of the delete. It should also delete the entries for the expression and all impressions of it from its surface table. It must ignore any subsequent messages relating to the expression or any of its impressions.

When an impressive device receives a delete message, it should delete all entries relating to impressions of the deleted surface from its surface table. It should no longer generate any messages relating to these impressions.

There will be a short period between the expressive device issuing this message and the impressive device receiving it and deleting the impression from its surface table. The impressive device may therefore send messages relating to the expression during this period, but no practical difficulty results as the expressive device will ignore any messages relating to expressions that it has deleted.

### SurfaceReleaseMsg (Unimpress)

This message is used by an impressive device to notify the expressive device that the impression has been unimpressed. When an impressive device no longer requires an impression, it deletes it from its surface table and sends the expressive device a SurfaceReleaseMsg message. The impressive device must then ignore all messages relating to the deleted impression. It is possible that a device has multiple impressions of the same surface: in this case, the impressive device will only ignore messages where they relate specifically to the unimpressed impression.

When an expressive message receives such a message, it should delete the entry relating to that specific impression from its surface table. It should no longer send any messages relating to that impression to the relevant impressive device.

There will be a short period between the impressive device issuing this message and the expressive device receiving it and deleting the entry from its surface table. The expressive device may therefore send messages relating to the impression during this period, but no practical difficulty results as the impressive device will ignore any messages relating to expressions that it has unimpressed.

### SurfaceRequestMsg (Surface Request)

This message is used by a device to request an impression from another device. The message requests one device to create an impression on the requestor. The name may or may not be a valid surface name on the remote device. If the name is valid, the remote device should create an impression on the requestor: if the name is not valid, the request should be rejected. The target surface identifier must be a valid identifier for an expression of which the remote device has an impression: otherwise, the request will be rejected.

When an expressive device receives a surface request, it should if necessary create the requested surface and use the impress message to impress it on the requesting device. Alternatively if the request is invalid, the expressive device should reject the request. The request identifier in the impress or reject message must be the same as the request identifier in the original request message.

### DescriptionRequestMsg (Description Request)

This message is used by an impressive device to request the description for a surface of which the device has an impression. The impression identifier must be a valid impression held by the requesting device. When the expressive device receives a request for further description it should use the description reply to return the requested description. Description requests may not be rejected, although the resulting reply may contain no data.

### DescriptionReplyMsg (Description Reply)

This message is used to return a description for a surface in response to a DescriptionRequestMsg message. The result of a bad request should contain no data, indicating that there is no more description for that specific request. There is no possibility of "rejecting" a description request, as a device which provides an impression of a surface has to be prepared to provide a complete description of that surface. The description reply must contain the request identifier from the description request to which it is a response.

### ContentRequestMsg (Content Request)

This message is used by an impressive device to request some content data from an expressive device. The impression identifier must be a valid impression held by the requesting device.

The sending device may request the content data to be exchanged over a stream connection. When a device receives such a content request it should create the new stream if requested, and then send the content back on that stream. If the receiving device does not support streams, it may instead revert to sending back the content as a series of content reply messages. Accordingly, if the requesting device requests transfer over a stream, it must be prepared to receive the content either over a stream or as a series of content reply messages.

### ContentReplyMsg (Content Data)

This message is used by an expressive device to send some content data to an impressive device. There may be a sequence of content data messages in response to a single content request. This message is also used to reject a request for content data.

If the content provider is providing the data over a stream, it sets the stream field to the stream identifier and leaves the content length and data empty. If the content provider does not support streams, or is unable to use a stream for this purpose, it sets the stream identifier to 0 and transmits the content data as a series of content reply messages: in this case, the content length and data are used to convey the contents of the message.

Typically, the ContentReplyMsg will only be used to reject a content request if the content provider can no longer satisfy the request for internal reasons, or if the request is invalid.

In all cases, the request identifier in the reply must be set to the request identifier contained in the original request.

When a device receives a content reply it must first determine if the reply is a rejection. If so, the device has to make a decision as to its next action. If the reply is not a rejection, then the device must determine if the content is being supplied over a stream or not. If the content is being supplied over a stream, it should be read from there: if not, then the content should be read from this and subsequent replies which have the same request identifier (as transport is ordered such replies will be in sequence, and the status field will identify the final reply in the series).

### SurfaceChangeMsg (Change)

This message is used for three purposes: first, by an expressive device to notify impressive devices of a change to a surface; second, by impressive devices to request a change to an expression; and third, to notify an impressive device of a failed request to change an expression.

When an expressive device makes a change to one of its expressions, it must notify all impressive devices of the change. It does this by looking up the impressions in its surface table and sending each impressive device a change message. Where a device has multiple impressions, it is not necessary for a change message to be sent for each impression: the impressive device maintains a link between the expression and the impressions.

When an impressive device receives a change message, it needs to perform the change on each of its impressions of the changed expression. In some cases the change message contains the change itself, whereas at other times the message may only contain a notification and the impressive device has to refetch the content for the changed surface. If the expressive device knows the encoding of content required by each impressive device, then the expressive device can be configured to provide separate change messages each containing the content in the form required by the relevant impressive device.

When an impressive device wants to make a change to one of its impressions, it must use the change message to send a request for the change to the expressive device. The impressive device must include in the message the version of the expression to which the requested change applies.

On receiving a change request message, an expressive device must decide whether to accept the change or reject it. The decision can be based on the version and the nature of the request. An expressive device notifies the requestor as to whether the change is accepted or rejected through a change message with the appropriate status set. The expressive device also notifies all the impressive devices of an accepted change using the change message, as previously described.

An impressive device which issues a successful change request will thus receive two notifications of the change, one being the change acceptance (sent specifically to it), and the other is the change notification, which is sent to all devices with impressions of the expression. These messages can be identified as relating to the same change from either the request identifier or the version information.

The nature and format of e-material will now be described, together with examples of its use for different document types.

As previously indicated, e-material is the form in which a surface is expressed. E-material comprises both description and content. The description is used by JetSend to negotiate the exchange of content. The description sets out the attributes of the surface. These attributes typically form a hierarchy of choices encompassing a number of attribute levels. These attributes indicate how information can be conveyed: the content itself is the perceivable information to be transferred.

A successful exchange of a surface between appliances requires that each attribute level describing the surface be identified and processed. The process of identifying and processing these levels between the appliances is called negotiation. Once the complete surface description has been negotiated, the surface content is exchanged.

The exchange of a surface between two JetSend appliances involves surface interaction messages as defined in the JIP. A surface description may be completed using description requests and description replies. The surface content exchange is completed using content requests and content replies. Under limited circumstances, surface content may be included in the surface description; this is called in-line content. With in-line content and a small description, an exchange may require only a single message. More commonly several messages are exchanged.

E-material is provided in the form of e-material blocks. The byte format for such blocks is discussed in the documents mentioned above, but at one level an e-material block can be represented in a two column table with attribute names in the first column and attribute values in the second column. An attribute name is a single specific keyword such as vResolution or vCompression. An attribute value is one or more values associated with an attribute such as (300,300) pixels per inch or vRLE (run length encoding). When an attribute value is specified as a list of values, they appear as a space-separated list in the value field.

The attribute-value pairs which appear in the e-material block are applicable to some portion of a JetSend surface. These attribute-value pairs may apply to the whole surface or to a specific portion of the surface. All attributes and some values are drawn from a limited set of predefined keywords. These are denoted in this specification by a "v" prefix such as vEncoding. Some values are drawn from a set of data types. These are denoted in this specification by an "em" prefix such as emListType. In this specification, there are a number of representational types defined to simplify the discussion of the grammar-like structure of JetSend surfaces: these will be indicated by appropriate identifiers, generally in the value field.

Certain attributes are associated with a set of values which offer a selection. Each set of values is called a selection list. Selection lists appear as a space-separated list in the value column of a two-column table. For example a vResolution attribute may have a selection list which contains values such as (300,300) pixels per inch or (150,150) pixels per inch. During the negotiation process, each attributes takes one value from the selection list. The selection of each value lends to the identification and processing of each attribute level of the surface description. In the e-material block shown in Table 26, the attributes vEncoding, vColorSpace, vPixelDepth, vResolution, and vCompression take selection lists as values. The attribute vSize does not. For convenience in this implementation, it is made a rule that attribute data that can be lists must be encoded as lists - even if they contain only one value.

That means that the attribute "vEncoding = vText" has to be encoded as a list with one element, vText. This makes interpreting attribute data slightly easier but composing it slightly harder.

**Table 1:**

| E-material block example | |
|---|---|
| *Attribute* | *Value* |
| ***vEncoding*** | ***vImage vText vFile*** |
| ***vColorSpace*** | ***vGray vSRGB*** |
| ***vSize*** | (72000,72000) |
| ***vPixelDepth*** | 1 8 24 |
| ***vResolution*** | (300,300) (150,150) |
| ***vCompression*** | ***vRLE vNone*** |

As the levels are identified and processed, the attributes which take selection lists and the selected values are enumerated in an e-material block. Attributes which do not take selection lists are omitted. This e-material block is called a decision block, since it represents the decisions as to the specific attributes of the e-material. The description request and content request include an e-material block which indicates the attributes of the e-material being requested. Table 2 shows one possible decision block selected from the table above.

**Table 2:**

| Sample decision block for Table 1 e-material block | | |
|---|---|---|
| *Encoding Hierarchy* | *Attribute* | *Value* |
| "" | ***vEncoding*** | ***vImage*** |
| ***vImage*** | ***vSize*** | (576000,756000) |
| ***vImage*** | ***vColorSpace*** | ***vGray*** |
| ***vImage.vGray*** | ***vPixelDepth*** | 1 8 |
| ***vImage.vGray***.1 | ***vResolution*** | (300,300) |
| ***vImage.vGray***.1. (300,300) | ***vPixels*** | (2400,3150) |
| ***vImage.vGray***.1. (300,300) | ***vCompression*** | ***vRLE*** |
| ***vImage.vGray***.8 | ***vResolution*** | (150,150) |
| ***vImage.vGray***.8.(150,150) | ***vPixels*** | (1200,1575) |
| ***vImage.vGray***.8.(150,150) | ***vCompression*** | ***vRLE*** |

An attribute block is an e-material block which sets out all the attribute-value pairs pertaining to a specific attribute level of the surface description. A surface description block is an ordered set of attribute blocks. A surface description block may be represented as a three-column table with attribute blocks occupying the last two columns. The first column of the table contains a decision path applicable to each attribute block. A decision path is constructed using the values from the decision block. These are concatenated together in a dot notation in the same order as the attribute blocks. Thus an attribute block applicable to an image might be qualified by a decision path such as vImage.vGray.8.(300,300).vRLE, indicating that it is a run-length encoded image with 300 by 300 dpi resolution and 8 bits per pixel gray scale. This notation describes the composition of the surface which is called the encoding hierarchy. The root of this hierarchy is called the null level.

**Table 3:**

| Sample surface description block | | |
|---|---|---|
| *Encoding Hierarchy* | *Attribute* | *Value* |
| "" | ***vEncoding*** | ***vImage*** |
| ***vImage*** | ***vSize*** | (576000,756000) |
| ***vImage*** | ***vColorSpace*** | ***vGray*** |
| ***vImage*.*vGray*** | ***vPixelDepth*** | 1 8 |
| ***vImage.vGray***.1 | ***vResolution*** | (300,300) |
| ***vImage.vGray.*1**. (300,300) | ***vPixels*** | (2400,3150) |
| ***vImage.vGray*.1**.(300,300) | ***vCompression*** | ***vRLE*** |
| ***vImage.vGray***.8 | ***vResolution*** | (150,150) |
| ***vImage.vGray***.8.(150,150) | ***vPixels*** | (1200,1575) |
| ***vImage.vGray***.8.(150,150) | ***vCompression*** | ***vRLE*** |

For example, in the case shown in Table 3 the null level of the encoding hierarchy is the attribute value pair showing that the value of attribute vEncoding is vimage. The encoding hierarchy forms a tree-like structure. Each node in this structure is an attribute level. At the next attribute level, the attribute block indicates that the attribute value pairs applying to this level are that vSize must take the value (576000,756000) whereas vColorSpace must take the value vGray. A level is terminal if none of the attributes that it contains takes selection lists or requires further description. This level is not a terminal one, as vGray itself has an attribute, vPixelDepth, and this takes a selection list of values. The decision path gives the set of decisions down the tree to the level indicated in the encoding hierarchy field. Each value in the decision path indicates descent to a next level down the encoding hierarchy tree, and the last value in the decision path is the name of the attribute level. A surface description is known to be complete when the level in the encoding hierarchy is known to be terminal: no further description beyond these levels is available.

A document is composed of one or more surfaces. Each surface may be given a name such as "mySurface" or "doc/plane3/image2". A document can be fully described using a four-column table with the last three columns occupies by surface description tables. The first column contains the name of the surface being described. An example of such a table is shown in Table 4.

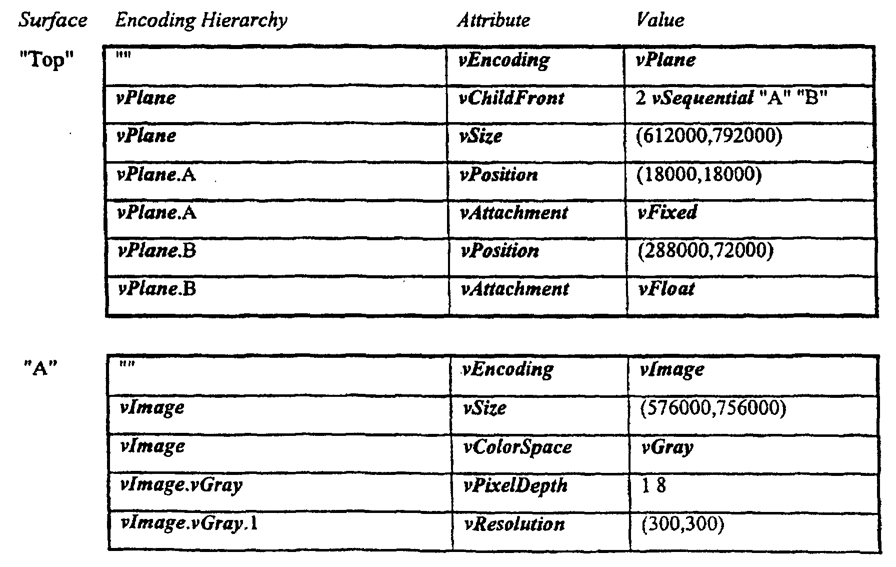

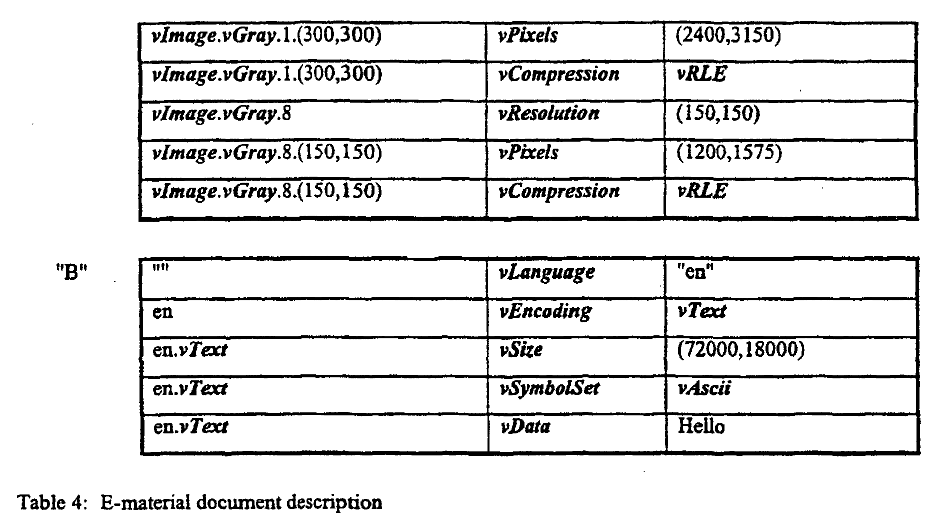

The surfaces in a document are organized in a tree-like structure. A document is composed of pages; the pages are composed of blocks of text or images; and so forth. Certain attributes of a given surface describe the arrangement of child surfaces of the level below. These attributes give rise to the surface hierarchy. The root of this hierarchy is called the top-level surface.

Some surfaces within the surface hierarchy have one or more child surfaces. These child surfaces are organized in one or more ordered child lists which are distinct for each parent surface. A child list may be well characterized, such as a list of images and text blocks on one side of one page. However it may not be fully available at any given time. Consider a stack of pages being scanned by a multi-page scanner. While a number, designation, and content exists for each page, the child list which reflects the composition of the stack is not so readily available at any given time. Such surfaces may not be created until they are requested, or at some other future time appropriate for relevant device operation.

The child list when characterized gives the names of the child surfaces related to a parent surface. In the surface description table, this is called a reference list.

The formal structure for e-material surface descriptions is set out in detail below. E-material is specified in tables, with the elements of each cell treated in a grammar-like fashion to determine the construction of a description from attributes and values. Low-level data types such as predetermined keywords, or null-terminated ASCII strings, would be terminal symbols in a grammar: here they relate to data types in e-material byte format (discussed further below).

E-material notational conventions are set out in Table 5 below.

**Table 5:**

| E-material notation conventions | |
|---|---|
| *Symbol* | *Interpretation* |
| ::= | may be replaced by |
| \| | An operator, designating an EXCLUSIVE OR, meaning to chose one among the vertical bars. |
| [] | The contents of the brackets are optional |
| {} | The contents of the braces delineate a set from which choices are made when the operators defined above are used and the scope is ambiguous. |
| **Bold** | Any symbol expressed in a bold typeface is an explicit symbol. |
| *Italic* | Any symbol expressed in an italic typeface is a predefined keyword, defined for use in this document. |
| ***BoldItalic*** | Any symbol expressed in a bold/italic typeface is an explicit predefined keyword. |
| null | A decision path of zero length. A reference to the root level of the encoding hierarchy. |
| · | period character |
| # | pound character |
| () | parenthesis characters |
| " " | quote characters |

E-material data types (corresponding to e-material byte format data types, which are discussed further below) are set out in Table 6.

**Table 6:**

| E-material data types | |
|---|---|
| *Assignment* | *Example* |
| emIntType ::= 32 bit signed integer | 10 |
| emIntPairType ::= (emIntType , emIntType) | (100, 200) |
| emRangeType ::= (emIntType..emIntType) | (100..600) |
| emRangePairType ::= (emIntType..emIntType, emIntType..emIntType) | (100..600, 200..600) |
| emStringType ::= null-terminated ASCII string | "string" |
| emKeyType ::= 16-bit integer representing predefined keywords that identify specific attributes and values. | ***vImage*** |
| emListType ::= emKeyType \| emIntType \| emIntPairType \| emRangeType \| emRangePairType \| emStringType [[ emListType]...] | 10 (100,200) (100..600) (100..600, 200..600) "string" ***vImage*** |
| emDataType ::= 8-bit binary data | 0xdeadbeef |

Attribute blocks are of the type set out in Table 7.

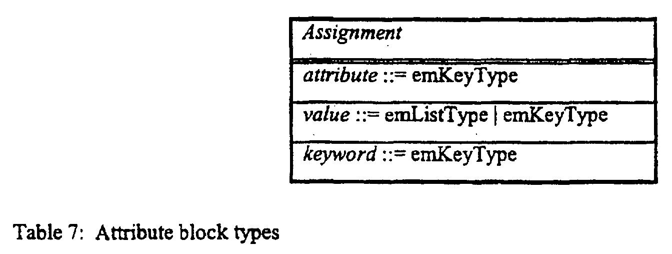

Many values are represented as e-material lists. "General lists" are simply values which are most easily handled together: the number of elements in the list is variable. "Selection lists" contain individual values which are selected during the negotiation process. "Reference lists" contain names of surfaces which are linked together to form pages or documents.

E-material general list specification types are set out in Table 8 below.

**Table 8:**

| E-material general list specification types | |
|---|---|
| *Assignment* | *Example* |
| *keywordList* ::= emKeyType[[ emKeyType]...] | ***vGray vSRGB vRGB*** |
| *intTripleListType* ::= emListType containing an emIntType triple | 255 255 255 |
| *rangePairListType* ::= emListType of one or more emRangeType | (100..600) (200..600) (500..600) |

The selection list can be a large number of token combinations as defined by emListType. Legal combinations are limited by the specific attributes with which the selection list is paired. While individual values in the selection list must match the attribute, there is no practical limit on the number of values in the list. Commonly occurring specification types are shown in Table 9.

**Table 9:**

| E-material selection list specification types | |
|---|---|
| *Assignment* | *Example* |
| *selection ::* = emKeyType emIntType emIntPairType emStringType | ***vImage vText vFile*** |
| *selectionList* ::= emListType | |
| *keySelectionList ::*= emKeyType[[ emKeyType]...] | ***vPlane vAssociation*** |
| *stringSelectionList ::=* emStringTyge[[ emStringType]...] | "speciall" "special2" |
| *keyStringSelectionList ::=* {emKeyType \| emStringType}[[ {emKeyType \| emStringType}]...] | ***vPlane*** "special" |
| *rangeSelectionList ::* = emRangeType[[ emRangeType)...] | (100..600, 200..600) (240..1200, 200..1200) |
| *intPairRangeTypeSelectionList ::=* { emIntPairType emRangeType }[[( emIntPairType emRangeType }]...] | (300,300) (100..600,200..600) |
| *languageSelectionList :: = stringSelectionList* | "en" "en-us" "en-gb" "en-um" "fr" "ge" "it " "sp" "da" " "ja" |
| *encodingSelectionList :: = keyStringSelectionList* | ***vPlane vImage*** "special" |

The ***vLanguage*** attribute may be included in any encoding hierarchy if reference to language and country is desired. This is required for the ***vText*** encoding and optional for other encodings. The ***vLanguage*** attribute requests a specific selection list. It identifies the languages and optionally the countries for which applicable characteristics are available. The expected format is *languageCode*[*-countryCode*]. It is a requirement that a language code be identified as a unique value even if the country code may following the language code as a distinct value. It is optional that the country code may be added to a unique language code if the country code would add further clarification to the value.

An encoding selection list generally only offers one or more emKeyType values such as ***vImage*** or ***vText.*** A special encoding may be added by defining an emStringType in the selection list associated with the ***vEncoding*** attribute and using it uniformly. It is considered independently of the keywords defined as emKeyType, so the emKeyType ***vAssociation*** is not the same as the special encoding emStringType **"*vAssociation*".**

The order of combinations within the selection list indicates the preference of the sending appliance.

A decision path is constructed from the values in a decision block. These values are in turn taken from selection lists. The encoding hierarchy is expressed in terms of these decision paths. The decision paths are used to identify the level of each attribute block. Decision path specification types are set out in Table 10 below.

**Table 10:**

| E-material decision path specification types | |
|---|---|
| **Assignment** | **Example** |
| *slKeyword ::=* emKeyType from a *selectionList*. | ***vColorSpace*** |
| *slInt:: =* emIntType from a *selectionList*. | 8 |
| *slPair :: =* emIntPairType from a *selectionList.* | (300,300) |
| *slString :: =* emStringType from a *selectionList*. | "special" |
| *selectionHierarchy* ::= *slKeyword* \| *slInt \| slPair \| slString* | (100..600), (200..600), (500..600) |
| *decisionPath* ::= "" \| null *\| selectionHierarchy*[[*.selectionHierarchy*]...] | ***vImage.vGray***.8. (300,300).***vRLE*** |

The *null level* provides an entry point for the encoding hierarchy of a JetSend surface. At the null level the decision path is null. The null level takes on any of three distinct forms depending on the situation:
- The null level may contain only the ***vEncoding*** attribute. This is the most common type of null level. Most surfaces begin with such a null level.
- The null level may contain only the ***vLanguage*** attribute. The ***vLanguage*** attribute is required for ***vText*** surfaces. It is occasionally seen with other surface encodings as well.
- When a surface description is incomplete, a description request and description reply must be done to complete the exchange of the surface description. The description request and description reply together must act on every attribute level to complete the surface description. Those attributes which take selection lists along with the values already selected appear in the decision block of the description request. Those attributes which take selection lists which have not been addressed appear in the decision path of the description reply. Since the break in the ordered list of attributes which take selection lists is established dynamically, any level may become the null level in the description reply.

The surface hierarchy arises from the use of reference lists. A reference list indicates the structure of the child surfaces in the child list which are linked to this parent surface. When a child list is available, the child surfaces in this list correspond directly to the *childCount* number and the child surface names in the reference list. At times, the child list is not available so the reference list indicates an incomplete picture.

The reference list is a simple e-material list, emListType. Most often the list takes the form of *childCount*, the keyword ***vSequential*** or ***vArbitrary*,** and a list of child surface names. A reference list may link together elements on a single page (in the case of the ***vPlane*** encoding) or other pages within a document (in the case of the ***vAssociation*** encoding). Each surface is a separately negotiated job element.

A reference list is only associated with the ***vPlane*** or ***vAssociation*** surface encodings. The other encodings (***vImage*, *vText, vFile*)** can only be terminal levels in the surface hierarchy. A ***vPlane*** encoding may have two **(*vChildFront*** for the front and ***vChildBack*** for the back) child surface lists, one (***vChildFront*** or ***vChildBack***) or none. A ***vAssociation*** encoding must have exactly one **(*vChild*)** child surface list. E-material reference list specification types are set out in Table 11.

**Table 11:**

| E-material reference list specification types | |
|---|---|
| **Assignment** | **Example** |
| *childCount* ::= emIntType | 1 |
| *reference* ::= emStringType | "A" |
| *referenceList* ::= *reference*[[ *reference*]...] | M3 M4 M7 |
| *shortReferenceList ::= childCount* **{*vArbitrary \| vSequential*** } *referenceList* The positive integer *childCount* matches the number of references in *referenceList.* | 3 ***vArbitrary*** M3 M4 M7 |
| *longReferenceList ::= childCount* {***vArbitrary \| vSequential*** } The *childCount* is a large positive value. | 207 ***vSequential*** |
| *unknownReferenceList* ::= *childCount* {***vArbitrary*** *\|* ***vSequential*** } The *childCount* is a negative value. | -3 ***vSequential*** |
| *zeroReferenceList* ::= 0 | 0 |
| *anyReferenceList* ::= *shortReferenceList* \| *longReferenceList* \| *unknownReferenceList \| zeroReferenceList* | |
| *planeReferenceList ::= referenceList* \| ***vFrontFirst \| vFrontLast \| vBackFirst* \| *vBackLast*** | ***vFrontLast*** |
| *assocationReferenceList* ::= *referenceList* \| ***vFirst \| vLast*** | M3 M4 M7 |

The *childCount* value may be negative, zero, or positive. Small positive values for *childCount* include a corresponding list of references, enumerating the full contents of the child list. Large positive values of *childCount* indicate that the child list is known but the reference list too long to be included. Other *childCount* values indicate the child list is unknown or zero length. In either case no references are included.

The ***vSequential*** and ***vArbitrary*** keywords are used to indicate whether there are any limitations on the order in which the sending appliance can send surfaces. This allows the receiving appliance to fully control the order of surfaces requested. It lets the receiving appliance know, in what order information, both content and child surfaces, may be requested. Content information about a child may be in-line, or the content information may be requested for one or more children at a time; however the surface description of a child must be requested one at a time.

The value ***vArbitrary*** indicates that the sending appliance can access, and send content information, and impress the child surfaces on the receiver in any order that is requested. The value ***vSequential*** means that the children may be requested only in a predetermined order because of limitations of the sending device.

The remainder of the reference list gives names of other surfaces. These names are present if the complete child list is known and relatively short. When references are included the following interpretation applies:
- The reference names must be unique.
- The # (pound sign) is a reserved symbol.
- The references indicate the children that are to be rendered on the plane.
- The order of the children is the order (in the z direction - discussed below with reference to vPlane) in which they should be rendered.
- When references are listed then the number of references must match the number of children specified under the *childCount* value. A partial listing of references is not allowed. If all cannot be listed, or the references are unknown, then they must be "discovered" through the mechanisms available in the content request.

It is possible that the content information for some children may be in-line. This is only allowed when a *referenceList* value is included with the ***vChildFront, vChildBack,*** or ***vChild*** attribute. For content that is not in-line, a content request is used.

To ensure that JetSend appliances communicate under all circumstances, specific decision paths must be present. These are called *default encodings*. Sending appliances must be able to produce e-material with the attributes described by these default decision paths. Similarly receiving appliances must be able to interpret e-material with these characteristics. An example is ***vImaga.vGray***.1. (300,300)*.****vRLE***, which is a default encoding for vImage.

Default encodings are present to ensure that appliances will exchange e-material under normal conditions. These encodings are the lowest common characteristics. *Base encodings* are recommended decision paths which permit appliances to exchange e-material with a higher degree of fidelity. Other attributes and values are considered optional. Examples of base encodings for v**Ima**ge are ***vImage*.*vGray***.8. (150,150) .***vRLE***, ***vImage****.****vGray***.8.(150,150).***vNone***, and ***vImage.vSRGB****.*24.(150,150).***vNone***.

The default encodings are decision paths, each element of which comes from a selection list. Associated with each selection list is an attribute. Each of the attributes whose values make up a default encoding must be present in the surface description.

Encodings for the two types of surface of particular relevance to the present invention, vPlane and vAssociation will now be discussed in detail, and examples provided. Other encodings not discussed further here are discussed in detail at http://www.jetsend.hp.com/, US Patent Application No. 09/059,867 entitled "Method and Apparatus for Device Interaction by Protocol" and US Patent Application No. 09/059,909, of which the two latter applications are incorporated herein by reference as indicated above.

### vPlane

The vPlane encoding is designed to represent certain types of information relevant to spatial aspects of physical objects or renderings. In particular, it can represent pages (including double-sided pages), the relationship between two-dimensional regions on a page, including regions categorized as image, text and annotation, and can also represent the media upon which to render.

The value vPlane indicates a top level encoding, and contains children to represent complex information types. It is largely used to describe the relationship between these various children.

A plane could represent a page which consists of a front side and a back side: the page has size and color; and images and text could represent children which would be rendered on the plane. A plane could also represent a computer screen. The screen layout in this case consists of a single side. The screen has size and color. Images and text could represent multiple children that represent windows with text, sticky notes, and icons.

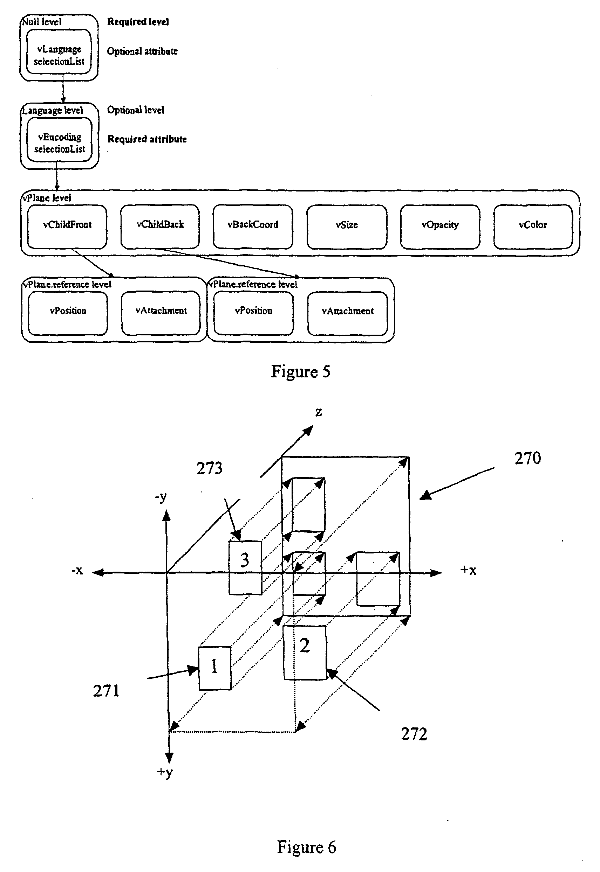

A graphical view of a vPlane encoding is provided in Figure 6. This indicates a plane 270 representing a surface. The surface is defined, and then children representing images are placed on the surface. The order of children along the z axis indicates the order in which the children are placed, or rendered, on the surface.

A hierarchy of attributes for vPlane is shown in Figure 5. The significance of each different attribute shown is briefly discussed:
vLanguage: The ***vLanguage*** attribute may be included if reference to language and country is desired. A default language value is not specified.
vEncoding: A vPlane is a page-like surface. It may have two sides, and usually has one or more sub-surfaces as children. The attributes are defined in this encoding.
vChildFront: Provides a reference list which links to any child surface on the front of the plane. A *childCount* value indicates the number of known child surfaces. It may be negative, zero, or positive. Small positive values of *childCount* are paired with a matching number of references. Other values are paired with no references. If there are limitations on the order in which the sending appliance can send the surfaces referenced, the ***vSequential*** keyword is used, otherwise the keyword is ***vArbitrary*.**
   This allows the receiving appliance to fully control the order of surfaces requested.
vChildBack: As for vChildFront, but the reference list links to any child surface on the back of the plane.
vBackCoord: Specifies the amount of rotation of the back plane coordinate system. The back plane must reflect the dimensions of the front. This attribute is optional if the ***vChildBack*** attribute is omitted. It may also be omitted if there are no changes to the back plane coordinate.

If the **x** and **y** values for the ***vSize*** attribute are equal (a square plane) the ***vBackCoord*** values supported are 0, 90, 180, and 270. If the X and Y values for the ***vSize*** attribute are not equal (a rectangular plane) the ***vBackCoord*** values supported are 0 and 180. Any child placed on the plane should be rendered with respect to this coordinate transform.

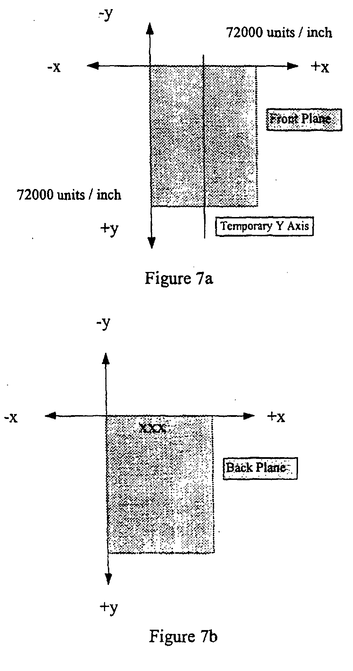

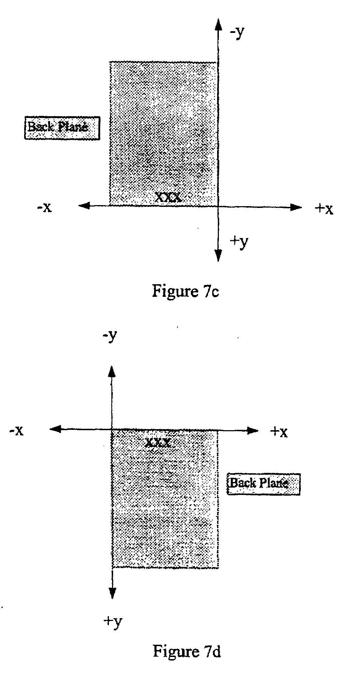

The vBackCoord is applied as follows: the back plane can be view as if it were flipped about the Temporary Y axis (reference Figure 7a and Figure 7b). The vBackCoord can then be applied as a rotation, counter clockwise, around the x, y intersection (reference Figure 7c). The plane is then moved to the default coordinate position (reference Figure 7d).
vSize: The attribute vSize designates rendering dimensions for the plane being described. Figure 6 shows the coordinate system assumed. It is also assumes that the integer values used are in real world coordinates of 1/72000 inch (meaning there are 72000 units per inch). The first integer value is along the **x**-axis, and the second integer value is along the **y**-axis.
vOpacity: Indicates opacity of the plane to underlying information. Values are 0-255, with default of 255 (opaque).
vColor: Indicates the colour of the plane. A list of three unsigned integer values, in the range 0-255. The first value is the Red component, the second the Green component, and the third is the Blue component. A 0 value indicates no intensity. 255 indicates full intensity. When the ***vOpacity*** value is 0, ***vColor*** values have no meaning.
vPosition: Represents the position of the child with respect to the parent plane. The first value in the pair is the **x**-coordinate, and the second value is the **y**-coordinate. This attribute may be included for the children referenced by the ***vChildFront*** and ***vChildBack*** attributes. This attribute must be listed, uniquely, for each child for which the information is to be provided. This attribute may be provided for any number of the referenced children.
vAttachment: Describes how the child may be manipulated relative to the parent.

The value ***nFixed*** indicates the child should remain fixed at the point specified by the ***vPosition*** attribute. The value ***vFloating*** indicates that the child may be repositioned relative to the parent by appliances capable of such manipulation.

The ***vAttachment*** attribute may be included for the children referenced by the ***vChildFront*** and ***vChildBack*** attributes. This attribute must be listed, uniquely, for each child for which the information is to be provided. This attribute may be provided for any number of the referenced children.

Description requests and replies are substantially as indicated above. There are differences in connection with content requests and replies. A content request will be used by a receiving device in two situations: to request information about child surfaces when they are not included, and when description information associated with a child reference was not available.

An example when all of the information would not be found in the description block would be when the child name *references* are not available. Those references can be requested through the Content Request using indirect child references (values of ***vFirst*** and ***vLast*)** to indicate that child information is being requested. A second instance when a Content Request would be used would be to request content information related to a child but relevant to the plane. A child's content information for the encoding for ***vPlane*** consists of ***vPosition*** and ***vAttachment*** attributes and values that that indicate the relationship between the child and the plane.

The receiving device needs a reference to each child. These child references are typically part of the *referenceList* associated with the ***vChildFront*** or ***vChildBack*** attributes or will have already been received through a Description Request as mentioned above. (Typically the description information for a referenced child is "in-line" as few attributes are associated with the child at this level). When the content information is not in-line a Content Request is used to request the information. The receiving device will provide the sending device with all of the selections that were made from the surface description to indicate to the sending device what selections were made. In addition, the receiving device will also provide the sending device with an explicit list of child references, if available, or an indirect reference (the values of ***vFirst*** and ***vLast***) to indicate a request for child information is being requested. The sending device can then return the description information associated with the child references.

A content request block will have optional attributes of vChild, vChildNext and vNumber.

vChild can take values such as vFrontFirst, vBackLast and similar or a reference list. If a child has previously been referenced using ***vFrontFirst*, *vFrontLast*, *vBackFirst*,** or ***vBackLast*,** these keyword values cannot be used again. If a single reference is made here, then it specifies a starting point for content information that is to be returned for one or more children: the number requested and the sequence, forward or backward from the reference is specified under the ***vNumber*** attribute. If a *referenceList* is specified, then it is an explicit request for the content of the children specified: the ***vNumber*** attribute is not used.

The keywords ***vFrontFirst*** and ***vBackFirst*** are indirect references to the first child in the structure. This applies when the name references are specified as well as when the name references are unknown. The keywords ***vFrontLast*** and ***vBackLast*** are used to refer to the last child in the same way. When, the number of children is unknown or access is sequential, the result of setting the child reference indirectly to the last one may not produce the results expected because the last one may not be accessible.

The sending device retains no status of previous requests made, so once ***vFrontFirst*, *vFrontLast*, *vBackFirst*,** or ***vBackLast*** are used, subsequent requests should use an explicit reference returned in the previous content reply or use the ***vChildNext*** attribute. The ***vChild*** attribute should never be used with the ***vChildNext*** attribute.

vChildNext can be used where a previous child has been referenced. vChildNext can be used to request content for the next child in the sequence, identified by the sending device. This attribute may not be used if a previous child has not been referenced. This attribute should be omitted if the ***vChild*** attribute is used with a reference name.

The reference value is the child name prior to the child information being requested. ***vChildNext*** can be used when the name of the next child is unknown. The number requested and the sequence, forward or backward from the reference is specified under the ***vNumber*** attribute.

vNumber is optional, being used only when a single reference is specified under the ***vChild*** attribute, or when the ***vChild*** attribute is set to ***vFrontFirst*, *vFrontLast*, *vBackFirst*, *vBackLast*** or when the ***vChildNext*** attribute is used. ***vNumber*** is associated with a value indicating the number of references for which the receiving device is requesting content. When ***vNumber*** is used with a reference associated with the ***vChild*** attribute the items returned will include the referenced child. When ***vNumber*** is used with a reference associated with the ***vChildNext*** attribute, the number of items returned will not include the referenced child but will include children following the reference child.

Although the terms "prior" and "following" are used above in relation to *vChildNext,* it should be noted that if *vFrontLast* or *vBackLast* is used, the "next" child could be the previous child in the list.

If possible, the sender will send the content information for the children requested, in the order requested.
If this attribute is missing, or if the value is zero, then the sender will send the content of as many children as possible from the reference made.

The appropriate content reply is relatively straightforward. Attribute vNumber returns the number of children in the content reply. vNames returns child references in the order requested. vRemaining indicates a number of children for which no content request has yet been made. Values of vPosition and vAttachment should be provided for each of the references returned.

The following factors require consideration in use of vPlane.
1. In the current implementation the vPlane encoding can be seen as representing a virtual page, on which other surfaces (images, text and planes) can be placed. Examples of realisations of this virtual page include physical paper, whiteboards and displays of various kinds. The best analogy is a blank piece of paper with pictures and text cut and pasted onto it. In the physical world pages are double sided, and thus the vPlane encoding provides this concept to better mirror physical paper. A physical document is represented by a vAssociation encoding (discussed below) containing a number of vPlane encodings (one for each page) which can be considered basic units of the document. In general a vPlane encoding creates a spatial relationship between its child surfaces.
2. Each reference associated with the vChildFront, vChildBack, vChild, vChildNext, or vNames attributes must be unique. A mechanism has been provided in which a single surface may be referenced multiple times. If the receiving device wishes to implement this mechanism the receiving device would have the option of requesting the surface multiple times, or maintaining the reference data internally. A "#reference" (pound sign)(reference) may be included when the surface information is used multiple times but the child content (vPosition, vAttachment) information is different. The "#reference" acts as an index to uniquely identify the child and child content
3. When the referenceList does not contain the names of the child surfaces, they must be obtained through a content request.
4. When the value vSequential appears, the children may be requested only in a predetermined order because of limitations of the sending device. This implies a processing sequence of:
   - Request content information (which describes the attachment) of next child (using a content request and reply pair on the parent surface)
   - Request the surface description / impression of that child (using a description request and reply pair on that child surface)
   - Request the content of that child (using a content request and reply pair on that child surface)
   - Render that child
   - Request content (attachment) information of next child and so forth until no more children exist.
5. There are a number of ways to request content data for children, one or more at a time, whether the child list is known or unknown. The following methods are applicable to access the child surfaces in a child list:
   - Use ***vChild*** with one or more reference names to access the various child surfaces.
   - Use ***vFrontFirst*** or ***vBackFirst*** to access the first child surface in the list.
   - Use ***vFrontLast*** or ***vBackLast*** to access the last child surface in the list if appropriate.
   - Use ***vChildNext*** with ***vNumber*** equal to one or more to access the next one or more child surfaces in the list. This cannot be the first access to a child surface in this child list.
   - Use ***vChildNext*** with ***vNumber*** zero or undefined to access the remaining child surfaces in the list. This also cannot be the first access to a child surface in this child list.
6. Random access to surfaces in the child list is achieved by the following sequence:
   - Using the surface name as the value to the ***vChildFront*** or ***vChildBack*** attribute in a content request. The surface name is returned in the content reply. In the case of vPlane, attachment information is also returned.
   - Using the child surface name to construct a description request. The surface description is returned in a description reply.
   - Using a content request to get the surface content of the child surface. The information is returned in a content reply.
   - Render the content information.
   - This process continues as required.
7. Serial access to surfaces in the child list is achieved by:
   - Using ***vFrontFirst*** or ***vBackFirst*** as the value to the ***vChildFront*** or ***vChildBack*** attribute in a content request on the parent surface. (The value ***vFrontLast*** or ***vBackLast*** may be used as the value to these attributes if *childCount* is positive and ***vArbitrary*** key is given.) The surface name of the specified child surface in the child list is returned in the content reply along with the number of remaining child surfaces in the child list. In the case of the ***vPlane*** encoding, attachment information is also returned.
   - Using the child surface name to construct a description request. The surface description is returned in a description reply.
   - Using a content request to get the surface content of the child surface. The information is returned in a content reply.
   - Render the child surface content information. In the case of ***vPlane*** encoding, use the attachment information.
   - Using the child surface name as the value to the ***vChildNext*** attribute in a content request on the parent surface. The surface name of the next child surface in the child list is returned in the content reply along with the number of remaining child surfaces in the child list. In the case of the ***vPlane*** encoding, attachment information is also returned.
   - This process continues no child surfaces remain.
8. The values of ***childCount*** and ***vArbitrary*** or ***vSequential*** key indicate the methods of access to the various surfaces in the child list:
   - A small positive *childCount* value and ***vArbitrary*** key indicates that the child surfaces may be accessed in any manner: serially forward, serially backward, or randomly. Random access is made possible using the surface names in the reference list. Additionally in-line content for some child surface may be included.
   - A small positive *childCount* value and ***vSequential*** key indicates that the child surfaces may only be accessed serially forward. The surface names are included, but do not permit random access.
   - A large positive *childCount* value and ***vArbitrary*** key indicates that the child surfaces may be accessed in either serially forward or serially backward.
   - A large positive *childCount* value and ***vSequential*** key indicates that the child surfaces may only be accessed serially forward.
   - A negative *childCount* value (regardless of the setting of the ***vArbitrary*** or ***vSequential*** key) indicates that the child surfaces may only be "discovered" serially forward.
   - A *childCount* value of zero means that no child surfaces exist in the child list. In the case of ***vPlane*,** if both child lists are empty, the ***vPlane*** surface is only a rudimentary surface with a few attributes such as ***vColor*** and ***vSite.*** In the case of ***vAssociation*,** if the child list is empty, the surface is useless.
9. Access to the child surfaces in the list may be direct through the reference name or indirect through other mechanisms. Each child surface in the child list has a reference name and an order position in the list. An order is present for all child surface lists, whether the sending appliance is constrained to offer the surfaces in that order **(*vSequential*)** or is capable of offering the surfaces in any order **(*vArbitrary*).** Each child surfaces in a ***vPlane*** surface also has a position on the surface **(*vPosition*)** and a method of attachment **(*vAttachment*).** Direct access of description or content information from child surfaces is always through the reference name. Indirect access of description or content information from child surfaces is though moving forward or backward serially through the list of children.

### Examples of use of the vPlane encoding are indicated below.

Example 1 - One page plane, 8.5 inches by 11 inches, two children (probably images, but not included). Child content information is provided in-line.

| | vEncoding | vPlane |
|---|---|---|
| vPlane | vChildFront | 2 vArbitrary 4 5 |
| vPlane | vSize | (612000,792000) |
| vPlane.4 | vPosition | (72000,360000) |
| vPlane.4 | vAttachment | vFixed |
| vPlane.5 | vPosition | (612000,612000) |
| vPlane.5 | vAttachment | vFixed |

Example 2 - One page, two sides, the "front" side with two children and the "back" side with one child. Child content information is not provided in-line.

| | vEncoding | vPlane |
|---|---|---|
| vPlane | vChildFront | 2 vArbitrary 6 7 |
| vPlane | vChildBack | 1 vArbitrary 8 |
| vPlane | vBackCoord | 0 |
| vPlane | vSize | (8500,11000) |

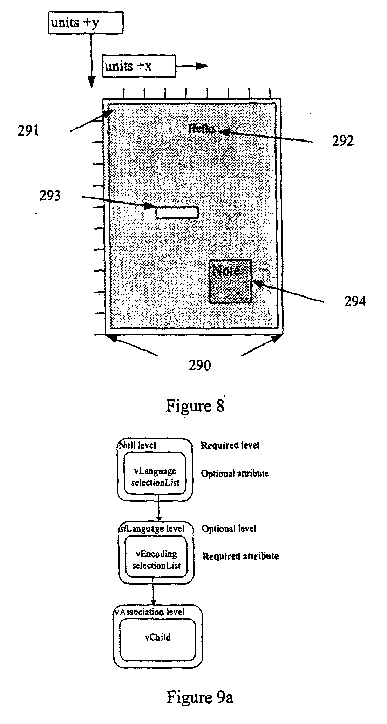

Example 3 - Plane 290 having one scanned page 291, 8.5 inches by 11 inches, with one annotation 292, a yellow highlight 293 and a red "sticky" type note 294 with text As the latter three would clearly have to have been added to the scanned image subsequently, the image is not generated dynamically and the number of children is known. Figure 8 illustrates this example pictorially.
The plane encoding without children is

| | vEncoding | vPlane |
|---|---|---|
| vPlane | vChildFront | 4 vSequential 1 2 3 4 |
| vPlane | vSize | (612000,792000) |
| vPlane.1 | vPosition | (90000, 90000) |
| vPlane.1 | vAttachment | vFixed |
| vPlane.2 | vPosition | (288000, 72000) |
| vPlane.2 | vAttachment | vFixed |
| vPlane.3 | vPosition | (900000, 360000) |
| vPlane.3 | vAttachment | vFixed |
| vPlane.4 | vPosition | (360000, 540000) |
| vPlane.4 | vAttachment | vFloating |

The first child represents one image (the background image).

| | vEncoding | vImage |
|---|---|---|
| vImage | vSize | (612000,792000) |
| vImage | ... | |
| | • | |
| | • | |
| | • | |

The second child represents a text annotation.

| | vEncoding | vText |
|---|---|---|
| vText | vSymbolSet | vAscii |
| vText | ... | |
| | • | |
| | • | |
| | • | |

The third child represents the yellow highlighted area: this is available in two colour models.

| | vEncoding | vPlane |
|---|---|---|
| vPlane | vSize | (144000, 14400) |
| vPlane | vColor | 255 255 0 |
| vPlane | vOpacity | 110 |

The fourth child represents a separate, red sticky type note

| | vEncoding | vPlane |
|---|---|---|
| vPlane | vChildFront | 1 vArbitrary 5 |
| vPlane | vSize | (144000, 144000) |
| vPlane | vColor | 255 0 0 |
| vPlane.5 | vPosition | (0.7200) |
| vPlane.5 | vAttachment | vFloating |

### vAssociation

In the current implementation the vAssociation encoding represents a sequential relationship between its child surfaces. It is primarily used to describe the relationship between the pages of documents (in accordance with the present invention to describe a relationship between multiple pages defining those multiple pages as a document, with the individual pages, rendered as vPlane encodings, as document parts). It can also be used to represent a sequential organisation of documents, for example a folder or other container. In the future vAssociation could be used to represent a sequence of video clips, audio clips or a mixture of pages, video and audio which are intended to be provided to the user in a sequence. Also the basic sequential character of vAssociation in the current implementation can be usefully extended to include other organisations such as random order (see further features below).

A hierarchy of attributes for vAssociation is shown in Figure 9a. The significance of each different attribute is apparent from discussion of the vPlane encoding. vAssociation simply provides an associate relationship between child surfaces: it has no attributes of its own in this implementation. However, as is discussed below, further features may be provided by addition of optional attributes for vAssociation, especially in the context of a vAssociation with vPlane children. Description requests and replies are technically possible, but are unlikely to be required in practice. For content requests and replies, essentially the same considerations as raised for vPlane apply in respect of child surfaces.

The mechanisms described for accessing the children of planes also apply generally to associations.
Associations are however more likely to be nested (i.e. one association may contain another association as a child surface). For example this is true for the case of a folder of documents, where the document is an association, and is a child surface of the folder which is also represented by an association. Devices are not required by the specification to preserve these nested relationships, although they are recommended to do so. All devices must be able to process nested associations at least to a minimum depth (the current implementation requires up to 4 levels). Some devices such as printers with finishing capabilities will probably make use of document children in folders to separate the documents out by stapling them. Other printers which don't have this capability will probably just print out the pages in sequence and so appear to discard the extra level of separation provided by the folder association. Note that planes may also be nested, but that is less common in the current implementation.

### Example 4 - An association representing a three page document. The children can be impressed in any order the receiver chooses, however the logical ordering of the children as 1,2,3 should be fixed.

| | vEncoding | vAssociation |
|---|---|---|
| vAssociation | child | 3 vArbitrary 1 2 3 |

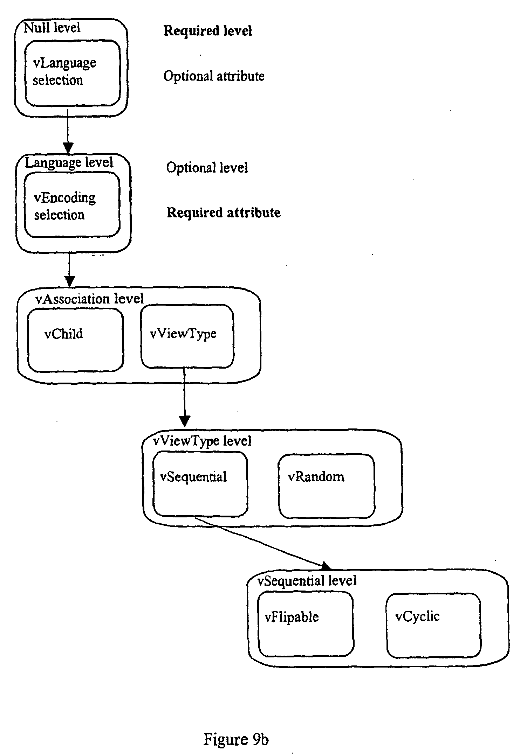

Further features can be added to the implementation above to increase the functionality of documents incorporating two-sided pages by use of the vPlane and vAssociation encodings as indicated above. Such features can be used to provide documents with behaviours still further analogous to physical documents.
This is illustrated in Figure 9b.

One further feature, particularly applicable with a vAssociation comprising vPlane children, is to specify whether the document comprises a sequence of separate children, or a random collection. This can be done by establishing an optional attribute for vAssociation, vPerspectives. This can be set to vSequential in the case of a sequential document (for example, a series of pages or perhaps images) and to vRandom if there is no relationship between the separate children beyond their inclusion in the document.

In the case of a sequential document, a further optional attribute can be used to provide information to determine the manipulation in three dimensions of the two-sided sheets of the document. This can be done by considering the association of two-sided pages as being subject to the same manipulation as used for viewing a real world document consisting of a series of two-sided pages. This attribute, vViewtype, can for example take on the value vFlipable, in which case an axis is defined at which the pages are joined and about which they can rotate, the axis emulating the spine of a book. Typically therefore, this axis will be at the left hand edge of the front side of each two-sided sheet. Alternatively, vViewtype can take on the value vCyclic, which defines a ring binder connection rather than an axis - typically in this case the ring will be set to join the top edges of all the two-sided sheets, and the resulting document has the three-dimensional behaviour of a reporter's notebook, with (on a viewing or display appliance) one page at a time being viewed, and a page, once turned, moving to the back of the sequence of pages and the next page being revealed.

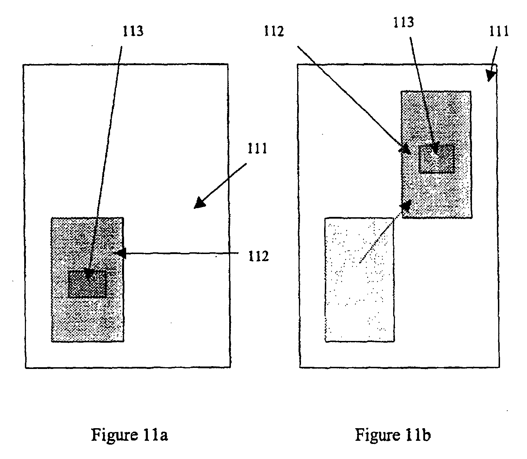

Further attributes to model physical behaviour can also be added to vPlane. For example, a further optional attribute vSticky can be used. vSticky is used to indicate that a side of a two-sided sheet has the quality of removeable attachment: that is, it has the same quality of adhesiveness, but repositionability, that is found in adhesive notes widely used in a physical office. If this quality is set for a side of a two-sided sheet, this indicates to an appliance that another object which can be considered adjacent to the surface set to be sticky will adhere to it and that the object having the "sticky" surface will move with the object it is attached to unless a step is taken to move the "sticky" object separately. This can be considered, for example, in the case of a vPlane encoding having two vPlane children as is shown in Figure 11a. The parent plane 111 has two children 112 and 113 ordered in the z-direction. In this case, the rear side of child plane 113 is set to be "sticky". Now, if attribute vFloating is set for child 112, then an appliance receiving the vPlane encoding may reposition child plane 112 relative to the parent plane 111 - this is shown in Figure 11b. However, as the rear side of child plane 113 is "sticky" and attached to child plane 112, it will be adapted to follow child plane 112 and be repositioned with it

Although the specific embodiment of the invention described here is in the context of the JetSend architecture, the invention is not in any way limited to use within this architecture. Implementation of the invention requires only a means for transmission of documents between one information handling appliance and another which allows for the representation of a document as one or more double-sided sheets. This could be achieved, for example, in a modification of existing printer languages or creation of a new printer language such that the basic element of a document is the double sided page. This approach is generally a desirable one where the creator of a document wants to determine how it will be rendered by a recipient - use of a double-sided page as a basic communication element may then be particularly applicable in electronic mail to deliver a defined form of document to a recipient, or in another context where the document is to be rendered in a specific physical form or arrangement without adjustment for an unwanted "optimisation" by the receiving or rendering device.

## Claims

1. A method for electronic representation of documents to allow communication of documents between information handling appliances, wherein a document is provided in the form of a container containing a plurality of document parts organised as nodes in a tree structure such that each branch of the tree structure defines a containment relationship between document parts, and wherein one or more of the document parts is a representation of a two-sided sheet with information contained in such a document part being defined by its relationship to one or both sides of the respective two-sided sheet.

2. A method as claimed in claim 1, wherein one type of container is a two-sided sheet.

3. A method as claimed in claim 1, wherein one type of container is a three-dimensional structure containing one or more two-sided sheets.

4. A method as claimed in claim 3, wherein a document in the form of a three-dimensional structure containing one or more two-sided sheets comprises information to determine the manipulation in three dimensions of the two-sided sheets of the document.

5. A method as claimed in claim 4, wherein said manipulation comprises rotation about an axis of the three dimensional structure.

6. A method as claimed in claim 1, wherein a side of a two-sided sheet may have the property of adherence to another two-sided sheet.

7. A method as claimed in claim 6, wherein said adherence is removable adherence.

8. A method as claimed in claim 1, wherein the degree of opacity of a two-sided sheet is a selectable quality.

9. A method as claimed in claim 1, wherein the colour of a two-sided sheet is a selectable quality.

10. A method as claimed in claim 1, wherein for a piece of information attached to a two-sided sheet, a fixed position of attachment is determined.

11. A method as claimed in claim 1, wherein for a piece of information attached to a two-sided sheet, a position of attachment is determined which is variable by an information handling appliance receiving the document containing the information.

12. An information handling device adapted to send or receive documents represented by the method as claimed in any of claims 1 to 11.

13. An informational handling device as claimed in claim 12 comprising means for printing a document.

14. An information handling device as claimed in claim 12 adapted for displaying a document.

15. An information handling device as claimed in claim 12 adapted for creating or editing a document.

## Patentansprüche

1. Ein Verfahren für die elektronische Darstellung von Dokumenten, um eine Kommunikation von Dokumenten zwischen Informationshandhabungsvorrichtungen zu ermöglichen, bei dem ein Dokument in der Form eines Behälters geliefert wird, der eine Mehrzahl von Dokumentteilen enthält, die als Knoten in einer Baumstruktur organisiert sind, derart, daß jeder Zweig der Baumstruktur eine Behältnisbeziehung zwischen Dokumentteilen definiert, und bei dem eines oder mehrere der Dokumentteile eine Darstellung eines zweiseitigen Blattes mit Informationen sind, die in einem solchen Dokumentteil enthalten sind, der durch die Beziehung derselben zu einer oder beiden Seiten des jeweiligen zweiseitigen Blattes definiert ist.

2. Ein Verfahren gemäß Anspruch 1, bei dem ein Typ von Behälter ein zweiseitiges Blatt ist.

3. Ein Verfahren gemäß Anspruch 1, bei dem ein Typ von Behälter eine dreidimensionale Struktur ist, die ein oder mehrere zweiseitige Blätter enthält.

4. Ein Verfahren gemäß Anspruch 3, bei dem ein Dokument in der Form einer dreidimensionalen Struktur, die ein oder mehrere zweiseitige Blätter enthält, Informationen umfaßt, um die Manipulation des zweiseitigen Blattes des Dokuments in drei Dimensionen zu bestimmen.

5. Ein Verfahren gemäß Anspruch 4, bei dem die Manipulation eine Rotation um eine Achse der dreidimensionalen Struktur umfaßt.

6. Ein Verfahren gemäß Anspruch 1, bei dem eine Seite eines zweiseitigen Blattes die Eigenschaft des Haftens an einem anderen zweiseitigen Blatt aufweisen kann.

7. Ein Verfahren gemäß Anspruch 6, bei dem die Haftung eine entfernbare Haftung ist.

8. Ein Verfahren gemäß Anspruch 1, bei dem der Grad der Undurchsichtigkeit eines zweiseitigen Blattes eine auswählbare Qualität ist.

9. Ein Verfahren gemäß Anspruch 1, bei dem die Farbe eines zweiseitigen Blattes eine auswählbare Qualität ist.

10. Ein Verfahren gemäß Anspruch 1, bei dem für ein Stück Information, das an einem zweiseitigen Blatt befestigt ist, eine feste Befestigungsposition bestimmt ist.

11. Ein Verfahren gemäß Anspruch 1, bei dem für ein Stück Information, das an einem zweiseitigen Blatt befestigt ist, eine Befestigungsposition bestimmt ist, die durch eine Informationshandhabungsvorrichtung veränderbar ist, die das Dokument empfängt, das die Informationen enthält.

12. Ein Informationshandhabungsgerät, das angepaßt ist, um Dokumente zu senden oder zu empfangen, die durch das Verfahren gemäß einem der Ansprüche 1 bis 14 dargestellt sind.

13. Ein Informationshandhabungsgerät gemäß Anspruch 12, das eine Einrichtung zum Drucken eines Dokuments enthält.

14. Ein Informationshandhabungsgerät gemäß Anspruch 12, das zum Anzeigen eines Dokuments angepaßt ist.

15. Ein Informationshandhabungsgerät gemäß Anspruch 12, das zum Erzeugen oder Bearbeiten eines Dokuments angepaßt ist.

## Revendications

1. Un procédé de représentation électronique de documents pour permettre de communiquer des documents entre des appareils de traitement d'information, dans lequel un document est réalisé sous forme d'un conteneur qui contient une série de parties de documents organisées sous forme de noeuds dans une structure d'arbre telle que chaque branche de la structure d'arbre définit une relation de contenu entre des éléments d'un document, et dans lequel une ou plusieurs des parties du document est une représentation d'une feuille double face, une information contenue dans une telle partie de document étant définie par sa relation avec l'un et/ou l'autre des faces de la feuille respective double face.

2. Un procédé selon la revendication 1 dans lequel un type de conteneur est une feuille double face.

3. Un procédé selon la revendication 1, dans lequel un type de conteneur est une structure tridimensionnelle qui contient une ou plusieurs feuilles double face.

4. Un procédé selon la revendication 3, dans lequel un document en forme de structure tridimensionnelle contenant une ou plusieurs feuilles double face comprend une information destinée à déterminer la manipulation, en trois dimensions, des feuilles double face du document.

5. Un procédé selon la revendication 4, dans lequel ladite manipulation comprend une rotation autour d'un axe de la structure tridimensionnelle.

6. Un procédé selon la revendication 1, dans lequel une face d'une feuille double face peut posséder la propriété d'adhérer à une autre feuille double face.

7. Un procédé selon la revendication 6, dans laquelle ladite référence est une adhérence amovible.

8. Un procédé selon la revendication 7, dans lequel le degré d'opacité d'une feuille double face est une qualité qui peut être sélectionnée.

9. Le procédé selon la revendication 7, dans lequel la couleur d'une feuille double face est une qualité qui peut être sélectionnée.

10. Un procédé selon la revendication 1, dans lequel une position fixe d'attache est déterminée pour un élément d'information attaché à une feuille double face.

11. Un procédé selon la revendication 1, dans lequel une position d'attache, qui peut être modifiée par un appareil de manipulation d'information qui reçoit le document contenant l'information, est déterminée pour un élément d'information attaché à une feuille double face.

12. Un dispositif de manipulation d'information apte à envoyer ou à recevoir des documents représentés par le procédé de l'une quelconque des revendications 1 à 11.

13. Un dispositif de manipulation d'information selon la revendication 12 qui comprend un moyen d'impression d'un document.

14. Un dispositif de manipulation d'information selon la revendication 12 apte à afficher un document.

15. Un dispositif de manipulation d'information selon la revendication 12 apte à créer ou éditer un document.
